# EUROPEAN PATENT SPECIFICATION

(11) **EP 2 129 159 B1**
(45) Date of publication and mention of the grant of the patent: **31.05.2017**
(21) Application number: 08722141.2
(22) Date of filing: 14.03.2008
(51) Int. Cl.: H04W 4/00, H04J 1/00, H04J 11/00, H04L 5/00

(54) **BASE STATION, COMMUNICATION TERMINAL, TRANSMISSION METHOD, AND RECEPTION METHOD FOR RESOURCE BLOCK SCHEDULING**
BASISSTATION, KOMMUNIKATIONSENDGERÄT, SENDEVERFAHREN UND EMPFANGSVERFAHREN FÜR RESSOURCENBLOCKPLANUNG
STATION DE BASE, TERMINAL DE COMMUNICATION, PROCÉDÉ DE TRANSMISSION, ET PROCÉDÉ DE RÉCEPTION POUR LA PROGRAMMATION DE BLOCS DE RESSOURCES

(30) Priority: 20.03.2007 JP 2007073733
(43) Date of publication of application: 02.12.2009
(73) Proprietor: NTT DOCOMO, INC., Chiyoda-ku Tokyo 100-6150 (JP)
(72) Inventor: MIKI, Nobuhiko, Tokyo 100-6150 (JP); HIGUCHI, Kenichi, Tokyo 100-6150 (JP); SAWAHASHI, Mamoru, Tokyo 100-6150 (JP)
(74) Representative: Hoffmann Eitle
(86) International application number: PCT/JP2008/054745
(87) International publication number: WO 2008/123024

(56) References cited:
- NTT DOCOMO ET AL: "L1/L2 Control Channel Structure for E-UTRA Downlink", 3GPP DRAFT; R1-060032 DL L1L2 CONTROL CHANNEL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Helsinki, Finland; 20060119, 19 January 2006 (2006-01-19), XP050111175, [retrieved on 2006-01-19]
- NTT DOCOMO: "Physical Channels and Multiplexing in Evolved UTRA Downlink", 3GPP DRAFT; R1-050590_PHYSICAL CHENNELS AND MULTIPLEXING IN DL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Sophia Antipolis, France; 20050616, 16 June 2005 (2005-06-16), XP050111408, [retrieved on 2005-06-16]
- NTT DOCOMO ET AL: "CQI-based Transmission Power Control for Control Channel in Evolved UTRA", 3GPP DRAFT; R1-051145 CQI-BASED TRANSMISSION POWER CONTROL FOR CONTROL CHANNEL IN EVOLVED UTRA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. San Diego, USA; 20051004, 4 October 2005 (2005-10-04), XP050100757, [retrieved on 2005-10-04]
- MIN-KUAN CHANG ET AL: "Power control, adaptive modulation and subchannel allocation for multiuser downlink OFDM", 2004 IEEE 60TH VEHICULAR TECHNOLOGY CONFERENCE. VTC2004-FALL (IEEE CAT. NO.04CH37575) IEEE PISCATAWAY, NJ, USA, IEEE, vol. 1, 26 September 2004 (2004-09-26), pages 764-768, XP010788480, DOI: 10.1109/VETECF.2004.1400111 ISBN: 978-0-7803-8521-4
- "3rd Generation Partnership Project; Technical Specification Group Radio Access Network; Physical layer aspects for evolved Universal Terrestrial Radio Access (UTRA) (Release 7)", 3GPP STANDARD; 3GPP TR 25.814, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V7.1.0, 13 October 2006 (2006-10-13), pages 1-132, XP050369161,
- NTT DOCOMO, FUJITSU, MITSUBISHI ELECTRIC, NEC, SHARP, TOSHIBA CORPORATION: 'ACK/NACK Signal Structure in E-UTRA Downlink' 3GPP TSG RAN WG1 MEETING #47 vol. R1-063326, 06 November 2006, pages 1 - 3, XP050103770
- NTT DOCOMO, ERICSSON, FUJITSU, MITSUBISHI ELECTRIC CORPORATION, NEC, SHARP, TOSHIBA CORPORATION: 'L1/L2 Control Channel Structure for E-UTRA Downlink' 3GPP TSG-RAN WG1 LTE AD HOC MEETING vol. R1-060032, 23 January 2006, pages 1 - 9, XP050111175

## Description

### TECHNICAL FIELD

The present invention generally relates to wireless communication technologies. More particularly, the present invention relates to a base station, a communication terminal, a transmission method, and a reception method used in a communication system where frequency scheduling and multicarrier transmission are employed.

### BACKGROUND ART

In the field of wireless communication, there is a growing demand for a broadband wireless access system that enables efficient, high-speed, high-volume communications. For downlink channels in such a system, a multicarrier scheme such as orthogonal frequency division multiplexing (OFDM) appears to be a promising method to achieve high-speed, high-volume communications while effectively suppressing multipath fading. Also, in next generation systems, use of frequency scheduling is proposed to improve the frequency efficiency and thereby to increase the throughput.

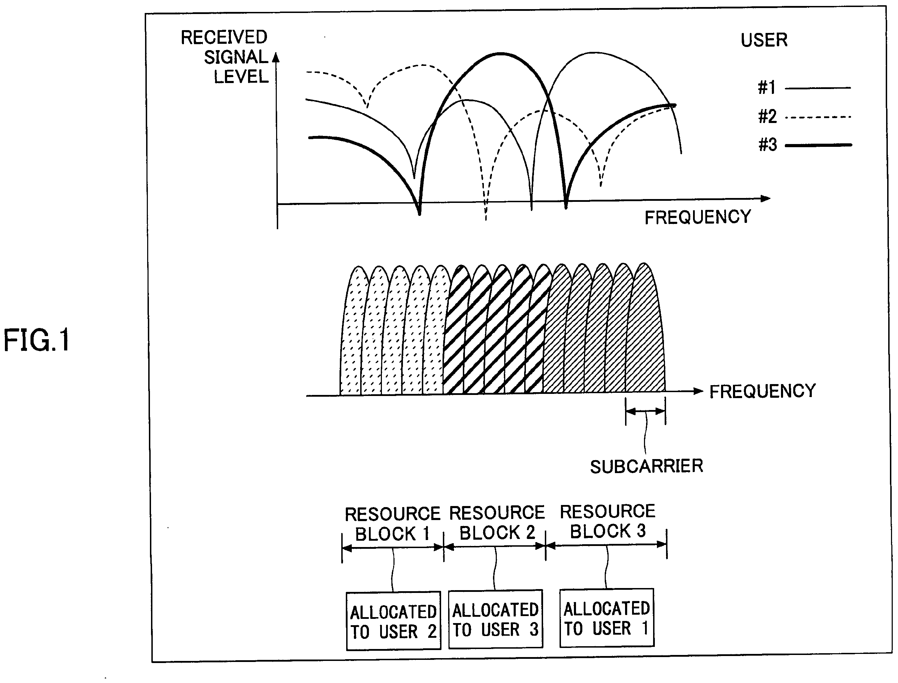

As shown in FIG. 1, in next generation systems, a system frequency band is divided into multiple resource blocks (in this example, three resource blocks) each including one or more subcarriers. The resource blocks are also called frequency chunks. Each terminal is allocated one or more resource blocks. In a frequency scheduling method, to improve the transmission efficiency or the throughput of the entire system, resource blocks are allocated preferentially to terminals with good channel conditions according to received signal quality or channel quality indicators (CQIs) measured and reported by the terminals based on downlink pilot channels for the respective resource blocks. When frequency scheduling is employed, it is necessary to report scheduling information indicating the results of scheduling to the terminals. The scheduling information is reported to the terminals via control channels (may also be called L1/L2 control signaling channels or associated control channels). The control channels are also used to report modulation schemes (e.g., QPSK, 16 QAM, or 64 QAM) and channel coding information (e.g., channel coding rates) used for scheduled resource blocks as well as information regarding hybrid automatic repeat request (HARQ). A method of dividing a frequency band into multiple resource blocks and using different modulation schemes for the respective resource blocks is, for example, disclosed in " A Practical Discrete Multitone Transceiver Loading Algorithm for Data Transmission over Spectrally Shaped Channel", P. Chow, J. Cioffi, J. Bingham, IEEE Trans. Commun. vol. 43. No.2/3/4, February/March/April 1995.

NTT DOCOMO ET AL: "L1/L2 Control Channel Structure for E-UTRA Downlink", 3GPP Draft; R1-060032, 2006-01-19 discusses a block-wise transmission for L1/L2 control information. It is proposed to split the L1/L2 control information into two parts - shared L1/L2 control information and dedicated L1/L2 control information.

NTT DOCOMO ET AL: "ACK/NACK Signal Structure in E-UTRA Downlink", 3GPP DRAFT; R1-063326 DL ACK, vol. RAN WG1; no. Riga, Latvia, 2 November 2006, relates to a relationship between the index of the downlink L1/L2 control channel for uplink radio resource assignment and the index of the ACK/NACK radio resources.

### DISCLOSURE OF INVENTION

### PROBLEMS TO BE SOLVED BY THE INVENTION

In a next generation wireless access system, various frequency bands, broad and narrow, may be employed and terminals may be required to use such various frequency bands depending on their locations or applications. For example, various reception frequency bands may be provided for terminals with different applications or at different prices. Also in this case, appropriate frequency scheduling makes it possible to improve the frequency efficiency and the throughput. However, because conventional communication systems are designed to use a fixed frequency band, no concrete method has been established yet for appropriately reporting scheduling information to terminals or users in a system where frequency bands with various bandwidths are provided for the base station and the terminals and all combinations of the frequency bands are allowed.

When a resource block common to all terminals is statically allocated to a control channel, it may happen that some terminals cannot receive the control channel with good quality because channel conditions of a resource block differ from terminal to terminal. Meanwhile, distributing a control channel to all resource blocks may make it possible for all terminals to receive the control channel with certain reception quality. However, with this method, it is difficult to further improve the reception quality. For these reasons, there is a demand for a method of transmitting control channels with higher quality to terminals.

In a system where adaptive modulation and coding (AMC) is employed, i.e., where the modulation scheme and the channel coding rate used for a control channel are adaptively changed, the number of symbols used to transmit the control channel varies from terminal to terminal. This is because the amount of information transmitted per symbol varies depending on the combination of the modulation scheme and the channel coding rate. For a next generation system, it is also being discussed to send and receive different signals by multiple antennas provided at the sending and receiving ends. In this case, control information such as scheduling information as described above may be necessary for each of the signals transmitted by the respective antennas. In other words, in such a system, the number of symbols necessary to transmit a control channel may differ from terminal to terminal and also differ depending on the number of antennas used by the terminal. When the amount of information to be transmitted via a control channel varies from terminal to terminal, it is preferable to use a variable format that can flexibly accommodate various amounts of control information to improve resource use efficiency. However, using a variable format may increase the signal processing workload at the sending and receiving ends. Meanwhile, when a fixed format is used, it is necessary to set the length of a control channel field to accommodate the maximum amount of control information. In this case, even if a control channel occupies only a part of the control channel field, the resources for the remaining part of the control channel field cannot be used for data transmission and as a result, the resource use efficiency is reduced. For these reasons, there is a demand for a method to transmit control channels in a simple and highly efficient manner.

Examples of the present invention make it possible to solve or reduce one or more problems caused by the limitations and disadvantages of the background art. One object of the present invention is to provide a base station, a communication terminal, a transmission method, and a reception method that make it possible to efficiently transmit control channels to terminals supporting different bandwidths in a communication system where each of multiple frequency blocks constituting a system frequency band includes multiple resource blocks each including one or more subcarriers and each of the terminals communicates using one or more of the frequency blocks.

### MEANS FOR SOLVING THE PROBLEMS

The object of the invention is achieved by the subject-matter of the independent claims. Advantageous embodiments are defined in the dependent claims. Further examples are provided for facilitating the understanding of the invention.

An aspect of the present invention provides a base station used in a communication system where a system frequency band allocated to the communication system includes multiple frequency blocks and each of the frequency blocks includes multiple resource blocks each including one or more subcarriers. The base station communicates with communication terminals each using one or more of the frequency blocks. The base station includes a management unit configured to manage the correspondence between bandwidths supported by the communication terminals and the frequency blocks to be allocated to the communication terminals; a frequency scheduler configured to generate scheduling information for each of the frequency blocks to allocate one or more resource blocks to each of selected communication terminals having good channel conditions; a channel generating unit configured to generate control channels including the scheduling information for the respective frequency blocks; a multiplexing unit configured to frequency-multiplex the control channels generated for the respective frequency blocks in the system frequency band; and a transmitting unit configured to transmit an output signal from the multiplexing unit according to a multicarrier scheme.

Another aspect of the present invention provides a base station including a coding and modulation unit configured to encode and modulate control channels including a general control channel to be decoded by communication terminals in general and specific control channels to be decoded by selected communication terminals that are allocated one or more resource blocks; a multiplexing unit configured to time-division-multiplex the general control channel and the specific control channels according to scheduling information; and a transmitting unit configured to transmit an output signal from the multiplexing unit according to a multicarrier scheme.

### ADVANTAGEOUS EFFECT OF THE INVENTION

An aspect of the present invention makes it possible to efficiently transmit control channels to communication terminals supporting different bandwidths in a communication system where each of multiple frequency blocks constituting a system frequency band includes multiple resource blocks each including one or more subcarriers.

### BRIEF DESCRIPTION OF THE DRAWINGS

FIG. 1 is a drawing used to describe frequency scheduling;
FIG. 2 is a drawing illustrating a frequency band used in an embodiment of the present invention;
FIG. 3A is a partial block diagram (1) of a base station according to an embodiment of the present invention;
FIG. 3B is a partial block diagram (2) of a base station according to an embodiment of the present invention;
FIG. 4A is a drawing illustrating signal processing components for one frequency block;
FIG. 4B is a drawing illustrating signal processing components for one frequency block;
FIG. 5A is a table showing exemplary information items of control signaling channels;
FIG. 5B is a drawing illustrating localized FDM and distributed FDM;
FIG. 6 is a drawing illustrating a unit of error correction coding;
FIG. 7A is a drawing illustrating exemplary mapping of data channels and control channels;
FIG. 7B is a drawing illustrating exemplary mapping of data channels and control channels;
FIG. 7C is a drawing illustrating exemplary multiplexing schemes for a general control channel;
FIG. 8A is a partial block diagram of a terminal according to an embodiment of the present invention;
FIG. 8B is a partial block diagram of a terminal according to an embodiment of the present invention;
FIG. 8C is a block diagram illustrating a receiving unit of a terminal;
FIG. 9A is a flowchart showing an exemplary process according to an embodiment of the present invention;
FIG. 9B is a drawing illustrating an exemplary method for reducing the amount of uplink data transmission information;
FIG. 10 is a drawing illustrating an example of frequency hopping;
FIG. 11 is a drawing illustrating an exemplary process and a frequency band used in the process according to an embodiment of the present invention;
FIG. 12 is a drawing illustrating another exemplary process and a frequency band used in the process according to an embodiment of the present invention;
FIG. 13 is a drawing illustrating an example of transmission power control (TPC);
FIG. 14 is a drawing illustrating an example of adaptive modulation and coding (AMC);
FIG. 15 is a drawing illustrating allocation of radio resources for retransmission;
FIG. 16 is a drawing illustrating allocation of radio resources for retransmission;
FIG. 17 is a drawing illustrating allocation of radio resources for retransmission; and
FIG. 18 is a table showing a configuration of a grant for retransmission.

### EXPLANATION OF REFERENCES

31 Frequency block allocation control unit
32 Frequency scheduling unit
33-x Control signaling channel generating unit for frequency block x
34-x Data channel generating unit for frequency block x
35 Broadcast channel (or paging channel) generating unit
1-x First multiplexing unit for frequency block x
37 Second multiplexing unit
38 Third multiplexing unit
39 Other channels generating unit
40 Inverse fast Fourier transform unit
41 Cyclic prefix adding unit
41 General control channel generating unit
42 Specific control channel generating unit
43 Multiplexing unit
81 Carrier frequency tuning unit
82 Filtering unit
83 Cyclic prefix removing unit
84 Fast Fourier transform unit (FFT)
85 CQI measuring unit
86 Broadcast channel decoding unit
87 General control channel decoding unit
88 Specific control channel decoding unit
89 Data channel decoding unit

### BEST MODE FOR CARRYING OUT THE INVENTION

According to an embodiment of the present invention, frequency scheduling is performed for respective frequency blocks and control channels for reporting scheduling information using the minimum bandwidth are generated for the respective frequency blocks. This method makes it possible to efficiently transmit control channels to communication terminals supporting various bandwidths.

The control channels generated for respective frequency blocks may be frequency-division-multiplexed according to a predetermined hopping pattern. This method makes it possible to equalize the communication quality of multiple communication terminals and frequency blocks.

A broadcast channel may be transmitted using a frequency band including the center frequency of a system frequency band allocated to a communication system and having a bandwidth corresponding to one frequency block. This method enables any communication terminal trying to access a communication system to easily connect to the communication system by receiving a signal transmitted using the minimum bandwidth around the center frequency.

A paging channel may also be transmitted using a frequency band including the center frequency of a system frequency band allocated to a communication system and having a bandwidth corresponding to one frequency block. This method enables a communication terminal to use the same frequency band for reception during the standby mode and for cell search, and is therefore preferable to reduce the number of times frequency tuning is performed.

Also, to equally use the entire frequency band, a paging channel for paging a communication terminal may be transmitted using a frequency block allocated to the communication terminal.

According to an embodiment of the present invention, control channels may include a general control channel to be decoded by communication terminals in general and specific control channels to be decoded by specific communication terminals that are allocated one or more resource blocks, and the general control channel and the specific control channels may be encoded and modulated separately. The general control channel and the specific control channels are time-division-multiplexed according to scheduling information and transmitted using a multicarrier scheme. This method makes it possible to efficiently transmit control channels using a fixed format without wasting resources even when the amount of control information varies from communication terminal to communication terminal.

The general control channel may be mapped so as to be distributed across the entire system frequency band and the specific control channels for specific communication terminals may be mapped only to resource blocks allocated to the specific communication terminals. That is, the specific control channels are mapped to resource blocks that provide good channel conditions for the respective specific communication terminals. Accordingly, this method makes it possible to improve the quality of the specific control channels while maintaining the quality of the general control channel at above a certain level for all users.

A downlink pilot channel may also be mapped so as to be distributed across multiple resource blocks allocated to multiple communication terminals. Mapping a pilot channel across a wide band, for example, makes it possible to improve the accuracy of channel estimation.

According to an embodiment of the present invention, to maintain or improve the reception quality of control channels including a general control channel and specific control channels, transmission power control is performed for the general control channel and one or both of transmission power control and adaptive modulation and coding are performed for the specific control channels.

Transmission power control may be performed for the general control channel such that the reception quality of the general control channel at specific communication terminals that are allocated resource blocks is improved. That is, although all users or communication terminals receiving a general control channel try to demodulate the general control channel, it is enough if users who are allocated resource blocks can successfully demodulate the general control channel.

The general control channel may include information on modulation schemes and/or coding schemes applied to the specific control channels. Since the combination of a modulation scheme and a coding scheme for the general control channel is fixed, users who are allocated resource blocks can obtain information on the modulation schemes and the coding schemes used for the specific control channels by demodulating the general control channel. In other words, this method makes it possible to perform adaptive modulation and coding for the specific control channels and thereby to improve the reception quality of the specific control channels.

When both transmission power control and adaptive modulation and coding are performed for the specific control channels, the total number of combinations of modulation schemes and coding schemes for the specific control channels may be less than the total number of combinations of modulation schemes and coding schemes for a shared data channel. This is because even if the required quality of the specific control channels is not achieved solely by adaptive modulation and coding, there is no problem as long as the required quality can be achieved by additionally performing transmission power control.

### <FIRST EMBODIMENT>

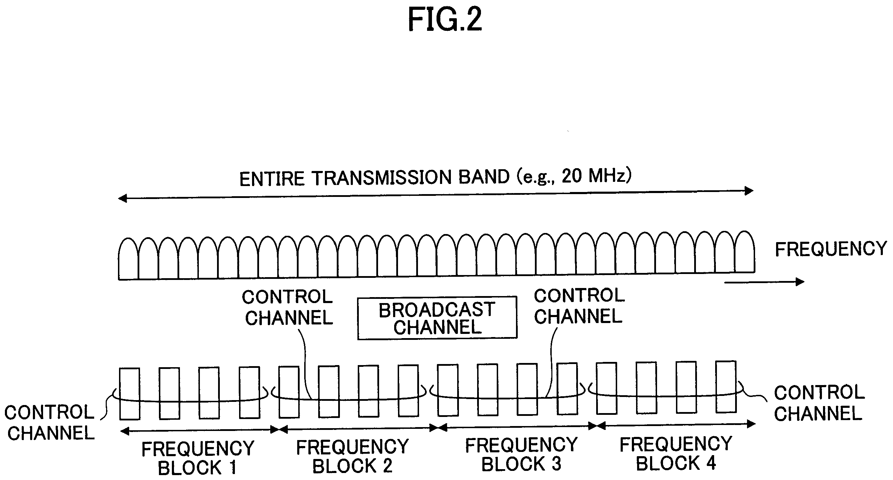

FIG. 2 is a drawing illustrating a frequency band used in an embodiment of the present invention. Values used in the descriptions below are just examples and different values may be used. In the example shown in FIG. 2, a frequency band (entire transmission band) allocated to a communication system has a bandwidth of 20 MHz. The entire transmission band includes four frequency blocks 1 through 4. Each of the frequency blocks includes multiple resource blocks each including one or more subcarriers. FIG. 2 schematically shows frequency blocks each including multiple subcarriers. In this embodiment, four different communication bandwidths of 5 MHz, 10 MHz, 15 MHz, and 20 MHz are provided. A communication terminal performs communications using one or more frequency blocks corresponding to one of the four bandwidths. A communication terminal in the communication system may support all of the four bandwidths or support only a part of the four bandwidths. Still, each communication terminal at least supports the 5 MHz bandwidth.

In this embodiment, control channels (L1/L2 control signaling channels or lower-layer control channels) for reporting scheduling information of data channels (shared data channels) to terminals are formed using the minimum bandwidth (5 MHz) and are provided for each frequency block. For example, when a terminal supporting the 5 MHz bandwidth performs communications using frequency block 1, the terminal receives control channels provided for frequency block 1 and thereby obtains scheduling information. Information indicating which terminals can use which frequency blocks for communications may be reported in advance to the terminals, for example, via a broadcast channel. Also, frequency blocks used by the terminals may be changed after communications are started. When a terminal supporting the 10 MHz bandwidth performs communications using adjacent frequency blocks 1 and 2, the terminal receives control channels provided for frequency blocks 1 and 2 and thereby obtains scheduling information for the 10 MHz bandwidth. When a terminal supporting the 15 MHz bandwidth performs communications using adjacent frequency blocks 1, 2, and 3, the terminal receives control channels provided for frequency blocks 1, 2, and 3 and thereby obtains scheduling information for the 15 MHz bandwidth. When a terminal supporting the 20 MHz bandwidth performs communications, the terminal receives control channels provided for all the frequency blocks and thereby obtains scheduling information for the 20 ) MHz bandwidth.

In FIG. 2, four discrete blocks labeled "control channel" are shown in each frequency block. This indicates that the control channels are mapped so as to be distributed across multiple resource blocks in the frequency block. Details of control channel mapping are described later.

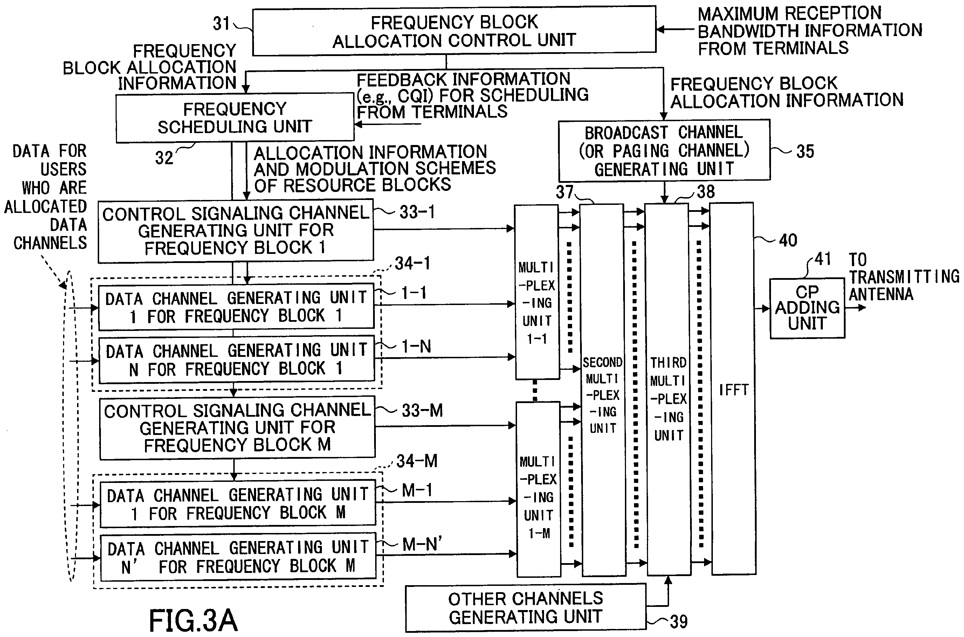

FIG. 3A is a partial block diagram of a base station according to an embodiment of the present invention. The base station shown in FIG. 3A includes a ) frequency block allocation control unit 31; a frequency scheduling unit 32; a control signaling channel generating unit 33-1 and a data channel generating unit 34-1 for frequency block 1, ..., and a control signaling channel generating unit 33-M and a data channel generating unit 34-M for frequency block M; a broadcast channel (or paging channel) generating unit 35; a first multiplexing unit 1-1 for frequency block 1, ..., and a first multiplexing unit 1-M for frequency block M; a second multiplexing unit 37; a third multiplexing unit ) 38; an other channels generating unit 39; an inverse fast Fourier transform unit (IFFT) 40; and a cyclic prefix (CP) adding unit 41.

The frequency block allocation control unit 31 determines a frequency block(s) to be used by a terminal (a mobile terminal or a fixed terminal) based on information regarding the maximum supported bandwidth reported by the terminal. The frequency block allocation control unit 31 manages the correspondence between respective terminals and frequency blocks and sends the correspondence information to the frequency scheduling unit 32. The correspondence between usable frequency blocks and terminals supporting different bandwidths may be reported in advance to the terminals via a broadcast channel. For example, the frequency block allocation control unit 31 allows a user supporting the 5 MHz bandwidth to use any one or a specific one of frequency blocks 1 through 4. For a user supporting the 10 MHz bandwidth, the frequency block allocation control unit 31 allows the use of two adjacent frequency blocks, i.e., frequency blocks "1 and 2", "2 and 3", or "3 and 4". The frequency block allocation control unit 31 may allow the user to use any one or a specific one of the combinations. For a user supporting the 15 MHz bandwidth, the frequency block allocation control unit 31 allows the use of three adjacent frequency blocks, i.e., frequency blocks "1, 2, and 3" or "2, 3, and 4". The frequency block allocation control unit 31 may allow the user to use any one or a specific one of the combinations. For a user supporting the 20 MHz bandwidth, the frequency block allocation control unit 31 allows the use of all frequency blocks. As described later, frequency blocks allowed to be used by a user may be changed after communications are started according to a frequency hopping pattern.

The frequency scheduling unit 32 performs frequency scheduling for each of the frequency blocks. The frequency scheduling unit 32 performs frequency scheduling for each frequency block based on channel quality indicators (CQIs) reported by terminals for respective resource blocks such that the resource blocks are allocated preferentially to terminals with good channel conditions, and generates scheduling information based on the scheduling results.

The control signaling channel generating unit 33-1 for frequency block 1 forms control signaling channels for reporting scheduling information of frequency block 1 to terminals using only resource blocks within frequency block 1. Similarly, each of the control signaling channel generating units 33 for other frequency blocks forms control signaling channels for reporting scheduling information of the corresponding frequency block to terminals using only resource blocks within the corresponding frequency block.

The data channel generating unit 34-1 for frequency block 1 generates data channels each of which is to be transmitted using one or more resource blocks in frequency block 1. Frequency block 1 may be shared by one or more terminals (users). Therefore, in this example, the data channel generating unit 34-1 for frequency block 1 includes N data channel generating units 1-1 through 1-N. Similarly, each of the data channel generating units 34 for other frequency blocks generates data channels for terminals sharing the corresponding frequency block.

The first multiplexing unit 1-1 for frequency block 1 multiplexes signals to be transmitted using frequency block 1. This multiplexing includes at least frequency division multiplexing. Multiplexing of the control signaling channels and the data channels is described later in more detail. Similarly, each of the first multiplexing units 1 for other frequency blocks multiplexes control signaling channels and data channels to be transmitted using the corresponding frequency block.

The second multiplexing unit 37 changes positional relationships of the first multiplexing units 1-x (x=1, ..., M) on the frequency axis according to a hopping pattern. Details of this process are described in a second embodiment.

The broadcast channel (or paging channel) generating unit 35 generates broadcast information such as office data to be reported to terminals covered by the base station. The broadcast information may include information indicating the correspondence between maximum supported bandwidths of terminals and usable frequency blocks. If the usable frequency blocks are to be varied, the broadcast information may also include information specifying a hopping pattern indicating how the usable frequency blocks are varied. A paging channel may be transmitted using the same frequency band as that used for the broadcast channel or using frequency blocks used by the respective terminals.

The other channels generating unit 39 generates channels other than control signaling channels and data channels. For example, the other channels generating unit 39 generates a pilot channel.

The third multiplexing unit 38 multiplexes control signaling channels and data channels of the frequency blocks, a broadcast channel, and/or other channels as necessary.

The inverse fast Fourier transform unit 40 inverse-fast-Fourier-transforms a signal output from the third multiplexing unit 38 and thereby modulates the signal according to OFDM.

The cyclic prefix (CP) adding unit 41 generates transmission symbols by attaching guard intervals to the OFDM-modulated symbols. A transmission symbol is, for example, generated by duplicating a series of data at the end (or head) of an OFDM-modulated symbol and attaching the duplicated data to the head (or end) of the OFDM-modulated symbol.

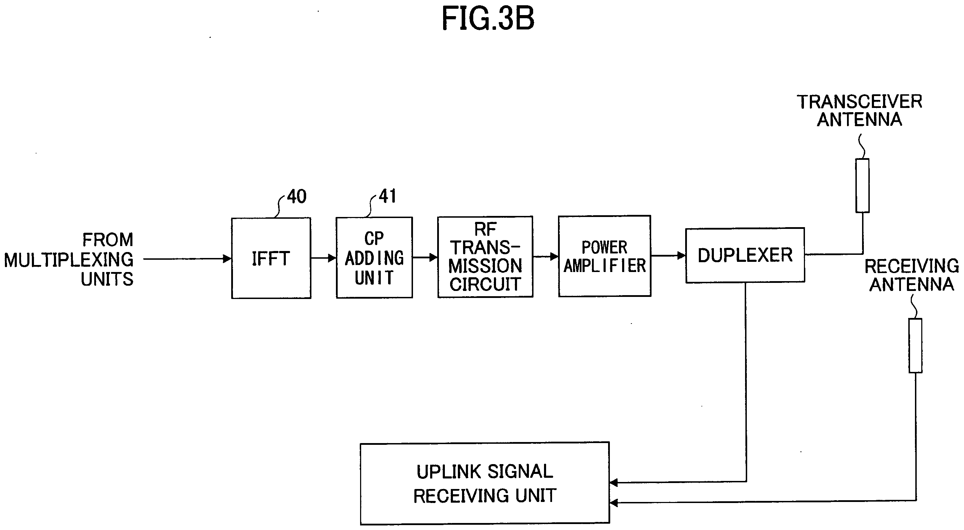

FIG. 3B shows components following the CP adding unit 41 shown in FIG. 3A. As shown in FIG. 3B, an RF transmission circuit performs digital-analog conversion, frequency conversion, and band limitation on the symbols with the guard intervals, and a power amplifier amplifies the symbols to an appropriate power level. Then, the symbols are transmitted via a duplexer and a transceiver antenna.

In this embodiment, it is assumed that the base station performs antenna diversity reception using two antennas, although this feature is not essential for the present invention. An uplink signal received by the two antennas is input to an uplink signal receiving unit.

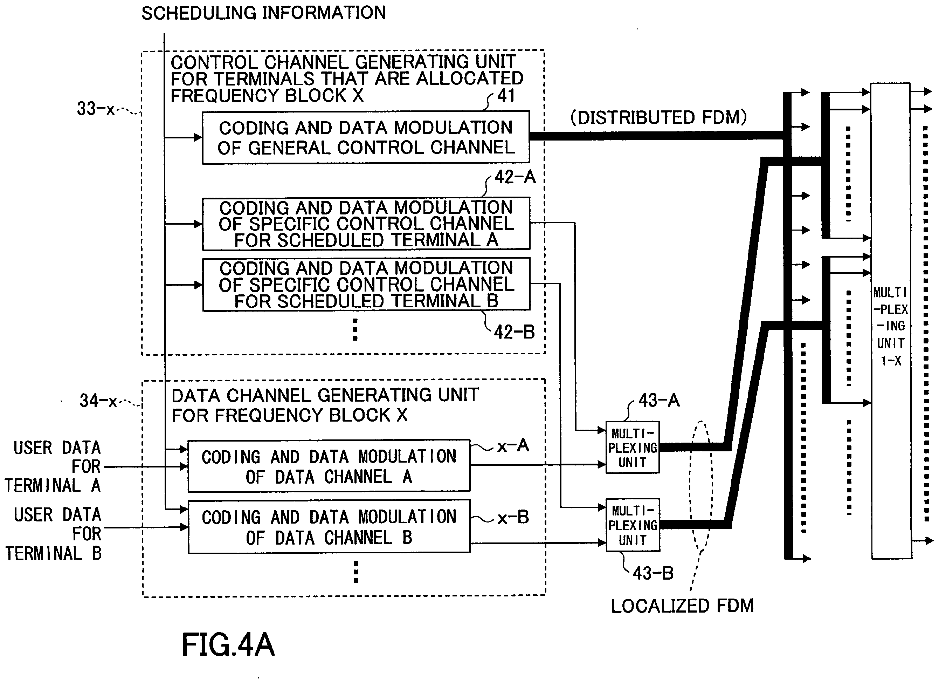

FIG. 4A is a drawing illustrating signal processing components for one frequency block (xth frequency block). In FIG. 4A, "x" indicates an integer greater than or equal to 1 and less than or equal to M. Signal processing components for frequency block x include a control signaling channel generating unit 33-x, a data channel generating unit 34-x, multiplexing units 43-A, 43-B, ..., and a multiplexing unit 1-x. The control signaling channel generating unit 33-x includes a general control channel generating unit 41 and one or more specific control channel generating units 42-A, 42-B, ....

The general control channel generating unit 41 performs channel coding and multilevel modulation on a general control channel (may also be called general control information), which is a part of the control signaling channels and to be decoded and demodulated by all terminals using the corresponding frequency block, and outputs the general control channel.

Each of the specific control channel generating units 42 performs channel coding and multilevel modulation on a specific control channel (may also be called specific control information), which is a part of the control signaling channels and to be decoded and demodulated by a terminal to which one or more resource blocks in the corresponding frequency block are allocated, and outputs the specific control channel.

The data channel generating unit 34-x includes data channel generating units x-A, x-B, ... that, respectively, perform channel coding and multilevel modulation on data channels for terminals A, B, ... . Information regarding the channel coding and the multilevel modulation is included in the specific control channels described above.

The multiplexing units 43 map specific control channels and data channels of respective terminals to resource blocks allocated to the terminals.

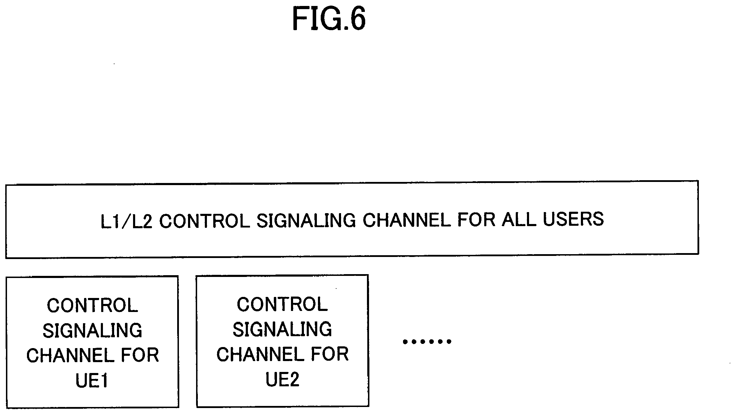

As described above, the general control channel generating unit 41 encodes (and modulates) the general control channel and the specific control channel generating units 42 encode (and modulate) the respective specific control channels. Accordingly, as schematically shown in FIG. 6, the general control channel of this embodiment includes sets of information for all users who are allocated frequency block x and the sets of information are collectively error-correction-coded.

Alternatively, the general control channel may be error-correction-coded for each user. In this case, a user cannot uniquely identify one of error-correction-coded blocks that includes information for the user. Therefore, the user has to decode all of the blocks. With this method, because encoding is performed for each user, it is comparatively easy to add or change users. Each user has to decode and demodulate the sets of information for all users in the general control channel.

Meanwhile, the specific control channels include only information for respective users to which resource blocks are actually allocated and are therefore error-correction-coded for the respective users. Whether a resource block(s) has been allocated to a user can be determined by decoding and demodulating the general control channel. Therefore, only users who are allocated resource blocks have to decode the specific control channels. The channel coding rates and modulation schemes for the specific control channels are changed during communications as needed. On the other hand, the channel coding rate and the modulation scheme for the general control channel may be fixed. Still, however, it is preferable to perform transmission power control (TPC) for the general control channel to achieve a certain level of signal quality. Error-correction-coded specific control channels are transmitted using resource blocks providing good channel conditions. Therefore, the amount of downlink data may be reduced to some extent by puncturing.

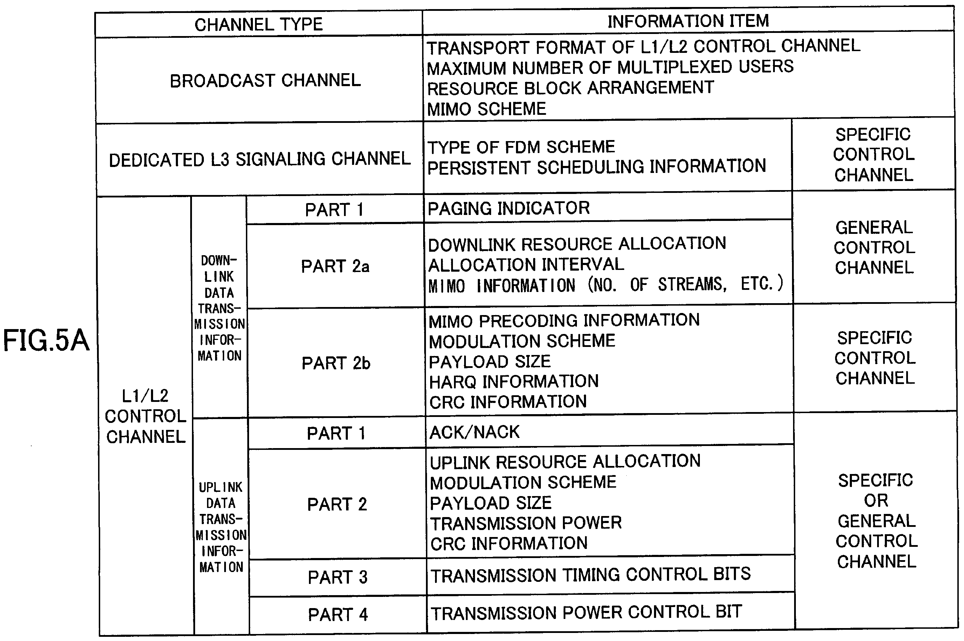

FIG. 5A shows types of downlink control signaling channels and exemplary information items of the respective downlink control signaling channels. Downlink control signaling channels include a broadcast channel (BCH), a dedicated L3 signaling channel (upper-layer control channel), and an L1/L2 control channel (lower-layer control channel). The L1/L2 control channel may include uplink data transmission information in addition to downlink data transmission information. Information items to be transmitted by the respective channels are described below.

### (Broadcast Channel)

The broadcast channel is used to report information that is unique to a cell or information that changes at long intervals to communication terminals (either mobile terminals or fixed terminals; may also be called user devices). For example, information that changes at an interval of 1000 ms (1 s) may be reported as broadcast information. Broadcast information may also include a transport format of a downlink L1/L2 control channel, the maximum number of multiplexed users, resource block arrangement information, and MIMO scheme information.

The transport format is specified by a data modulation scheme and a channel coding rate. Since a channel coding rate can be uniquely determined based on a data modulation scheme and a data size, the data size may be reported instead of the channel coding rate.

The maximum number of multiplexed users indicates the number of users that can be multiplexed within one TTI using one or more of FDM, CDM, and TDM. The same maximum number of multiplexed users may be specified for uplink and downlink, or different numbers may be specified for uplink and downlink.

The resource block arrangement information indicates positions of resource blocks used in a cell on the frequency and time axes. In this embodiment, two types of frequency division multiplexing (FDM) schemes are used: localized FDM and distributed FDM. In localized FDM, a consecutive frequency band locally-concentrated on the frequency axis is allocated preferentially to each user having good channel conditions. Localized FDM is suitable, for example, for communications of users with low mobility and for high-quality, high-volume data transmission. In distributed FDM, a downlink signal is generated such that it includes multiple intermittent frequency components distributed across a wide frequency band. Distributed FDM is suitable, for example, for communications of users with high mobility and for periodic transmission of small-size data such as voice packets (VoIP). Thus, frequency resources are allocated as a consecutive frequency band or discrete frequency components to each user based on the resource block arrangement information according to either of the FDM schemes.

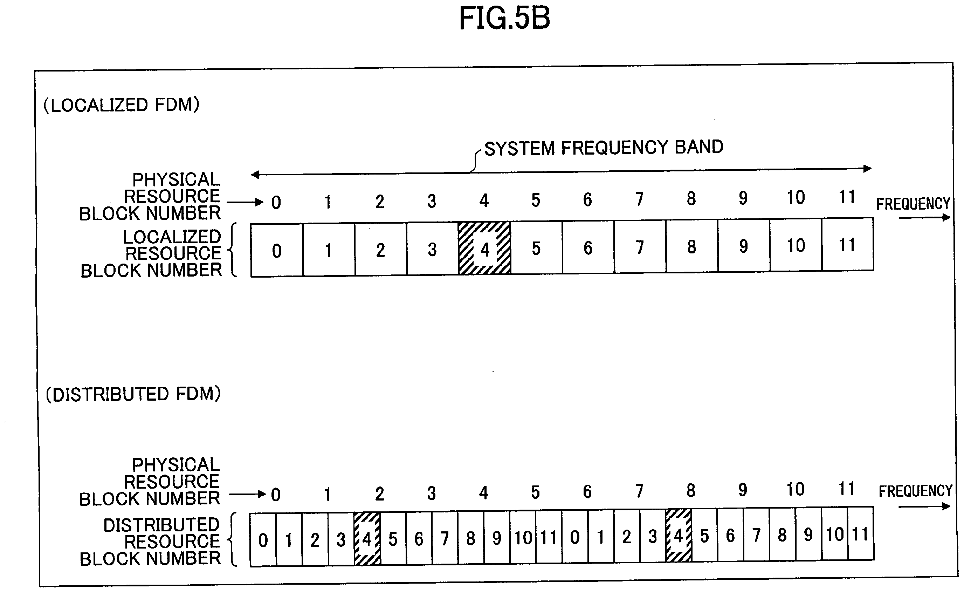

The upper half of FIG. 5B illustrates an example of localized FDM. In this example, when a resource is identified by a localized resource block number "4", it corresponds to physical resource block 4. The lower half of FIG. 5B illustrates an example of distributed FDM. In this example, when a resource is identified by a distributed resource block number "4", it corresponds to left halves of physical resource blocks 2 and 8. In the lower half of FIG. 5B, each physical resource block is divided into two. However, the numbering and the number of divisions of resource blocks in distributed FDM may vary from cell to cell. For this reason, the resource block arrangement information is reported via a broadcast channel to communication terminals in each cell.

The MIMO scheme information is reported if the base station is equipped with multiple antennas and indicates whether single-user multi-input multi-output (SU-MIMO) or multi-user MIMO (MU-MIMO) is used. In SU-MIMO, a base station with multiple antennas communicates with one communication terminal with multiple antennas. Meanwhile, in MU-MIMO, a base station with multiple antennas communicates with plural communication terminals at the same time.

### (Dedicated L3 Signaling Channel)

The dedicated L3 signaling channel is also used to report information that changes at long intervals, for example, at an interval of 1000 ms, to communication terminals. While the broadcast channel is sent to all communication terminals in a cell, the dedicated L3 signaling channel is sent only to specific communication terminals. The dedicated L3 signaling channel includes information on a type of FDM and persistent scheduling information. The dedicated L3 signaling channel may be categorized as a specific control channel.

The type of FDM indicates whether localized FDM or distributed FDM is used for each of selected communication terminals.

The persistent scheduling information is reported when persistent scheduling is employed and includes transport formats (data modulation schemes and channel coding rates) of uplink or downlink data channels and information on resource blocks to be used.

### (L1/L2 Control Channel)

The downlink L1/L2 control channel may include uplink data transmission information in addition to downlink data transmission information. Downlink data transmission information may be classified into part 1, part 2a, and part 2b. Part 1 and part 2a may be categorized as a general control channel and part 2b may be categorized as a specific control channel.

### (Part 1)

Part 1 includes a paging indicator (PI). Each communication terminal can determine whether it is being paged by demodulating the paging indicator.

### (Part 2a)

Part 2a includes resource allocation information for a downlink data channel, an allocation interval, and MIMO information.

The resource allocation information for a downlink data channel identifies a resource block(s) used for the downlink data channel. For the identification of resource blocks, various methods, such as a bitmap scheme and a tree numbering scheme, known in the relevant technical field may be used.

The allocation interval indicates a period of time for which the downlink data channel is transmitted continuously. The resource allocation can be changed as frequently as every TTI. However, to reduce the overhead, a data channel may be transmitted according to the same resource allocation for plural TTIs.

The MIMO information is reported when a MIMO scheme is used for communications and indicates, for example, the number of antennas and the number of streams. The number of streams may also be called the number of information sequences.

Although it is not essential, the whole or a part of user identification information may also be included in part 2a.

### (Part 2b)

Part 2b includes precoding information for a MIMO scheme, a transport format of a downlink data channel, hybrid automatic repeat request (HARQ) information, and CRC information.

The precoding information for a MIMO scheme indicates weighting factors applied to respective antennas. Directional characteristics of communication signals can be adjusted by adjusting the weighting factors to be applied to the respective antennas.

The transport format of a downlink data channel is specified by a data modulation scheme and a channel coding rate. Since a channel coding rate can be uniquely determined based on a data modulation scheme and a data size, the data size or a payload size may be reported instead of the channel coding rate.

The hybrid automatic repeat request (HARQ) information includes information necessary for retransmission control of downlink packets. More specifically, the HARQ information includes a process number, redundancy version information indicating a packet combination scheme, and a new data indicator indicating whether a packet is a new packet or a retransmission packet.

The CRC information is reported when cyclic redundancy checking is employed for error detection and indicates CRC detection bits convolved with user identification information (UE-ID).

Uplink data transmission information may be classified into part 1 through part 4. Basically, uplink data transmission information is categorized as a general control channel. However, for communication terminals that are allocated resources for downlink data channels, the uplink data transmission information may be transmitted as specific control channels.

### (Part 1)

Part 1 includes acknowledgement information for a previous uplink data channel. The acknowledgement information indicates either acknowledge (ACK) indicating that no error is detected in a packet or a detected error is within an acceptable range, or negative acknowledge (NACK) indicating an error out of the acceptable range is detected in a packet.

### (Part 2)

Part 2 includes resource allocation information for a future uplink data channel, and a transport format, transmission power information, and CRC information for the uplink data channel.

The resource allocation information identifies a resource block(s) usable for the transmission of the uplink data channel. For the identification of resource blocks, various methods, such as a bitmap scheme and a tree numbering scheme, known in the relevant technical field may be used.

The transport format of the uplink data channel is specified by a data modulation scheme and a channel coding rate. Since a channel coding rate can be uniquely determined based on a data modulation scheme and a data size, the data size or a payload size may be reported instead of the channel coding rate.

The transmission power information indicates a transmission power level to be used for the transmission of the uplink data channel.

The CRC information is reported when cyclic redundancy checking is employed for error detection and indicates CRC detection bits convolved with user identification information (UE-ID). In a response signal (downlink L1/L2 control channel) to a random access channel (RACH), a random ID of the RACH preamble may be used as a UE-ID.

### (Part 3)

Part 3 includes transmission timing control bits. The transmission timing control bits are used to synchronize communication terminals in a cell.

### (Part 4)

Part 4 includes transmission power information indicating a transmission power level of a communication terminal. Specifically, the transmission power information indicates a transmission power level to be used by a communication terminal, which is not allocated resources for uplink data channel transmission, to report a downlink CQI.

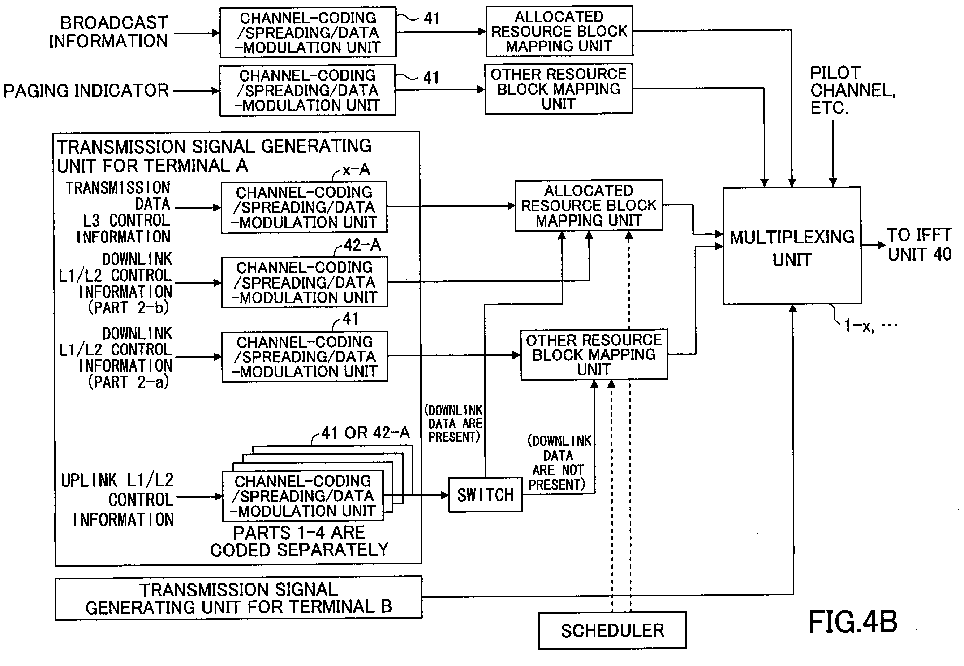

FIG. 4B, like FIG. 4A, shows signal processing components for one frequency block. FIG. 4B is different from FIG. 4A in that examples of control information are provided. In FIG. 4B, the same reference numbers are used for components corresponding to those in FIG. 4A. "Allocated resource block mapping" in FIG. 4B indicates that channels are mapped to one or more resource blocks allocated to a selected communication terminal. "Other resource block mapping" indicates that channels are mapped across the entire frequency block including multiple resource blocks. Uplink data transmission information (parts 1 through 4) in the L1/L2 control channel is transmitted as a specific control channel using resources allocated for a downlink data channel if available or transmitted as a general control channel using the entire frequency block if no resource is allocated for a downlink data channel.

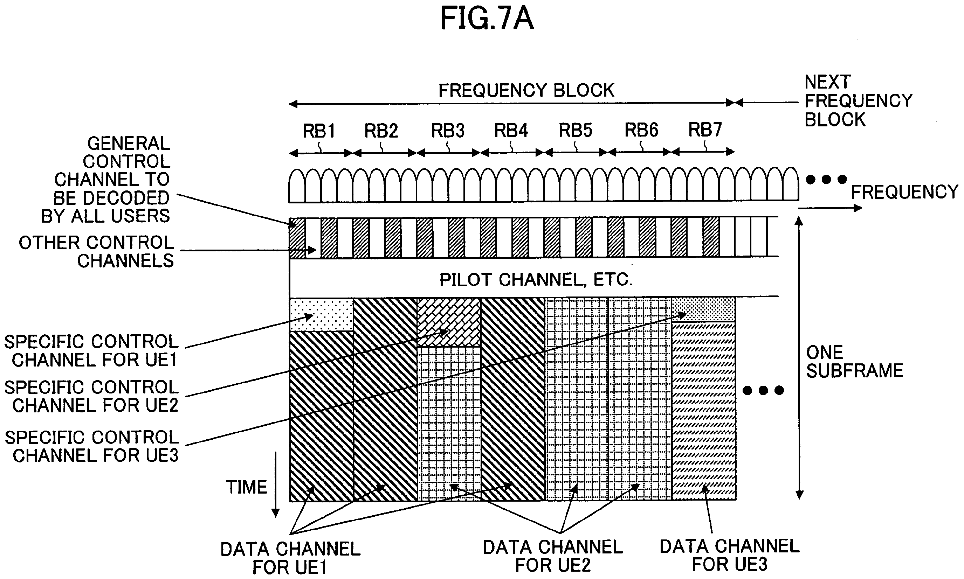

FIG. 7A is a drawing illustrating exemplary mapping of data channels and control channels. This example shows mapping of channels within one frequency block and one subframe and roughly corresponds to an output from the first multiplexing unit 1-x (except that channels such as a pilot channel are multiplexed by the third multiplexing unit 38). One subframe may correspond to one transmission time interval (TTI) or to multiple TTIs. In this example, a frequency block includes seven resource blocks RB1 through RB7. The seven resource blocks are allocated to terminals with good channel conditions by the frequency scheduling unit 32 shown in FIG. 3A.

Normally, a general control channel, a pilot channel, and data channels are time-division-multiplexed. The general control channel is mapped to frequency components distributed across the entire frequency block. In other words, the general control channel is distributed across a frequency band composed of seven resource blocks. In this example, the general control channel and other control channels (excluding the specific control channels) are frequency-division-multiplexed. The other control channels, for example, include a synchronization channel. In the example shown in FIG. 7A, the general control channel and the other control channels are frequency-division-multiplexed such that each of the channels is mapped to multiple frequency components arranged at intervals. Such a multiplexing scheme is called distributed frequency division multiplexing (FDM). The frequency components allocated to the respective channels may be arranged at the same intervals or at different intervals. In either case, it is necessary to distribute the general control channel across the entire frequency block.

In this example, the pilot channel is also mapped across the entire frequency block. Mapping a pilot channel to a wide frequency range as shown in FIG. 7A is preferable to accurately perform channel estimation for various frequency components.

In FIG. 7A, resource blocks RB1, RB2, and RB4 are allocated to user 1 (UE1), resource blocks RB3, RB5, and RB6 are allocated to user 2 (UE2), and resource block RB7 is allocated to user 3 (UE3). As described above, this resource block allocation information is included in the general control channel. A specific control channel for user 1 is mapped to the beginning of resource block RB1 allocated to user 1. A specific control channel for user 2 is mapped to the beginning of resource block RB3 allocated to user 2. A specific control channel for user 3 is mapped to the beginning of resource block RB7 allocated to user 3. Note that, in FIG. 7A, the sizes of the portions occupied by the respective specific control channels of users 1, 2, and 3 are not equal. This indicates that the amount of information of the specific control channel may vary depending on the user. The specific control channel is mapped locally to resources within a resource block allocated to a data channel. In contrast with distributed FDM where a channel is mapped to frequency components distributed across multiple resource blocks, this mapping scheme is called localized frequency division multiplexing (FDM).

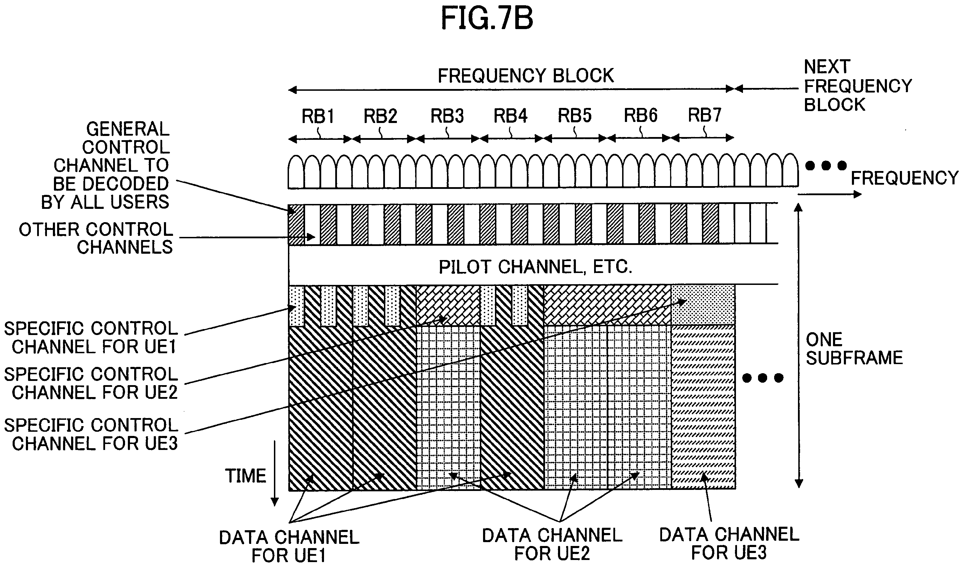

FIG. 7B shows another exemplary mapping of specific control channels. In FIG. 7A, the specific control channel for user 1 (UE1) is mapped only to resource block RB1. In FIG. 7B, the specific control channel for user 1 is mapped to frequency components discretely distributed across resource blocks RB1, RB2, and RB4 (across all the resource blocks allocated to user 1) by distributed FDM. The specific control channel for user 2 (UE2) is also mapped to all resource blocks RB3, RB5, and RB6 in a manner different from that shown in FIG. 7A. The specific control channel and the shared data channel of user 2 are time-division-multiplexed. Thus, a specific control channel and a shared data channel of a user may be multiplexed in the whole or a part of one or more resource blocks allocated to the user by time division multiplexing (TDM) and/or frequency division multiplexing (localized FDM or distributed FDM). Mapping a specific control channel across two or more resource blocks makes it possible to achieve frequency diversity gain also for the specific control channel and thereby to improve the reception quality of the specific control channel.

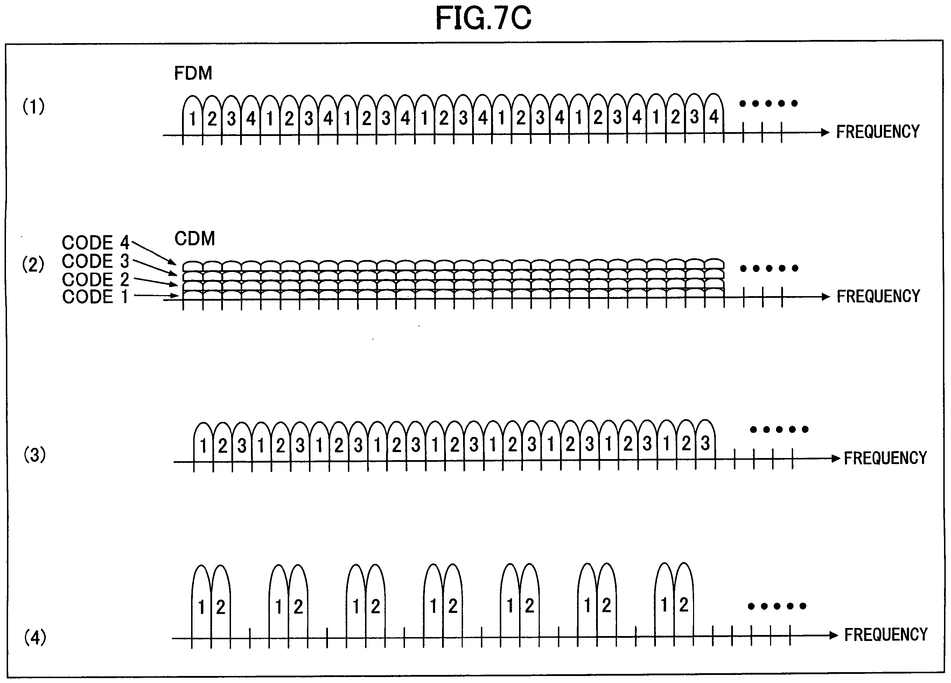

FIG. 7C shows exemplary multiplexing schemes. In the above example, sets of general control information are multiplexed by distributed FDM. However, any appropriate multiplexing scheme such as code division multiplexing (CDM) or time division multiplexing (TDM) may be used. FIG. 7C (1) shows an example of distributed FDM. In FIG. 7C (1), discrete frequency components identified by numbers 1, 2, 3, and 4 are used to properly orthogonalize user signals. Discrete frequency components may be arranged at regular intervals as exemplified or at irregular intervals. Also, different arrangement rules may be used for neighboring cells to randomize the interference when transmission power control is employed. FIG. 7C (2) shows an example of code division multiplexing (CDM). In FIG. 7C (2), codes 1, 2, 3, and 4 are used to properly orthogonalize user signals. FIG. 7C (3) shows an example of distributed FDM where the number of multiplexed users is three. In FIG. 7C (3), discrete frequency components are redefined by numbers 1, 2, and 3 to properly orthogonalize user signals. If the number of multiplexed users is less than the maximum number, the base station may increase the transmission power of downlink control channels as shown in FIG. 7C (4). A hybrid multiplexing scheme of CDM and FDM may also be used.

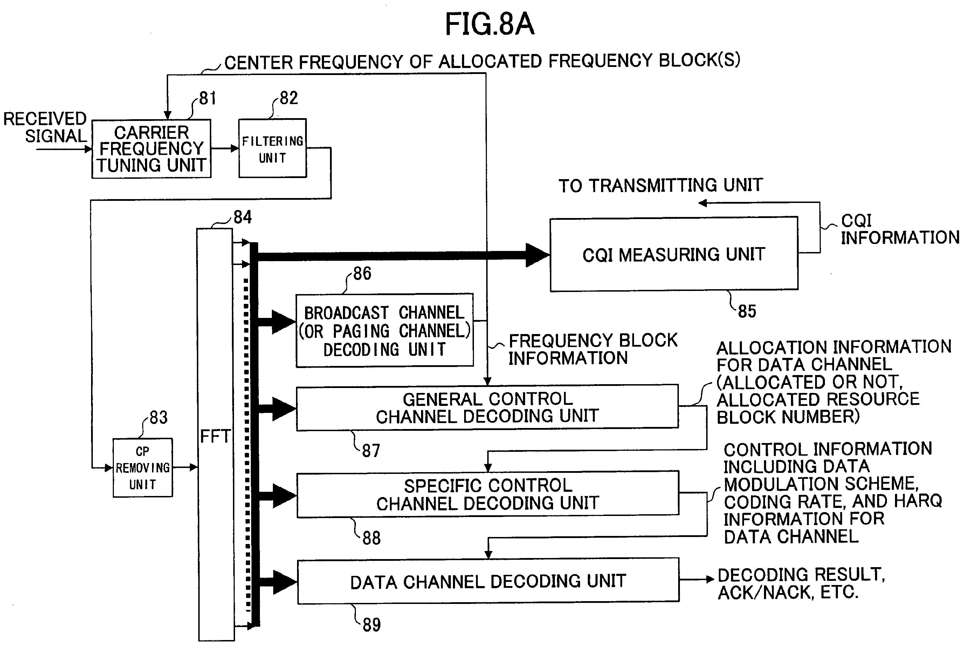

FIG. 8A is a partial block diagram of a mobile terminal according to an embodiment of the present invention. The mobile terminal shown in FIG. 8A includes a carrier frequency tuning unit 81, a filtering unit 82, a cyclic prefix (CP) removing unit 83, a fast Fourier transform unit (FFT) 84, a CQI measuring unit 85, a broadcast channel (or paging channel) decoding unit 86, a general control channel decoding unit 87, a specific control channel decoding unit 88, and a data channel decoding unit 89.

The carrier frequency tuning unit 81 appropriately adjusts the center frequency of the reception band so as to be able to receive a signal in a frequency block allocated to the terminal.

The filtering unit 82 filters the received signal.

The cyclic prefix removing unit 83 removes guard intervals from the received signal and thereby extracts effective symbols from received symbols.

The fast Fourier transform unit (FFT) 84 fast-Fourier-transforms information in the effective symbols and demodulates the information according to OFDM.

The CQI measuring unit 85 measures the received power level of a pilot channel in the received signal and feeds back the measurement as a channel quality indicator (CQI) to the base station. The CQI is measured for each resource block in the frequency block and all measured CQIs are reported to the base station.

The broadcast channel (or paging channel) decoding unit 86 decodes a broadcast channel. The broadcast channel (or paging channel) decoding unit 86 also decodes a paging channel if it is included.

The general control channel decoding unit 87 decodes a general control channel in the received signal and thereby extracts scheduling information. The scheduling information includes information indicating whether resource blocks are allocated to a shared data channel for the terminal. If resource blocks are allocated, the scheduling information also includes information indicating the corresponding resource block numbers.

The specific control channel decoding unit 88 decodes a specific control channel in the received signal. The specific control channel includes a data modulation scheme, a channel coding rate, and HARQ information for the shared data channel.

The data channel decoding unit 89 decodes the shared data channel in the received signal based on information extracted from the specific control channel. The mobile terminal may report acknowledge (ACK) or negative acknowledge (NACK) to the base station according to the result of decoding.

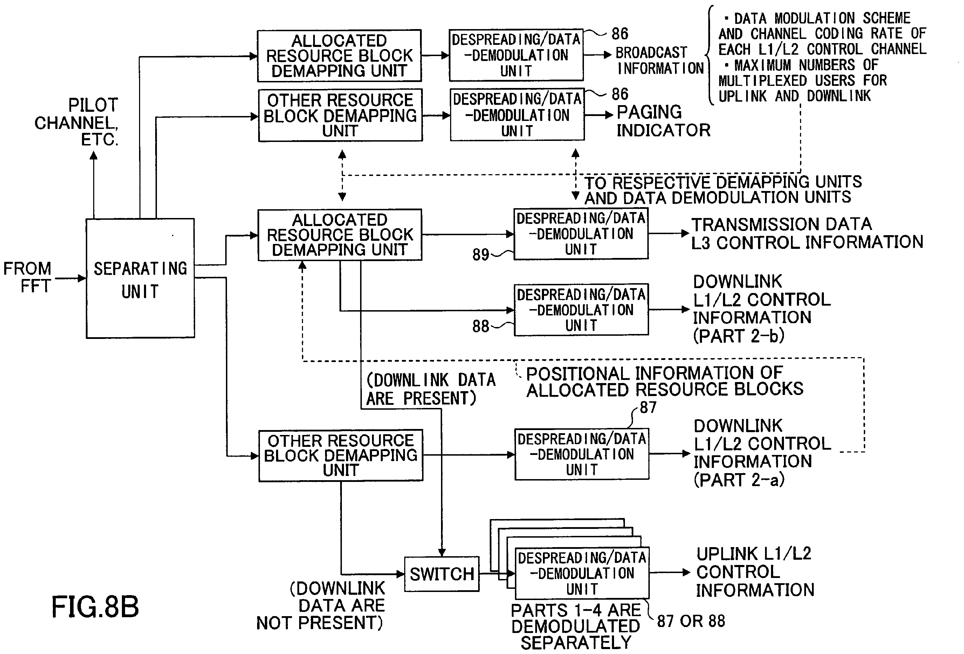

FIG. 8B is also a partial block diagram of the mobile terminal of this embodiment. FIG. 8B is different from FIG. 8A in that examples of control information are provided. In FIG. 8B, the same reference numbers are used for components corresponding to those in FIG. 8A. "Allocated resource block demapping" in FIG. 8B indicates that information mapped to one or more resource blocks allocated to the terminal is extracted. "Other resource block demapping" indicates that information mapped across the entire frequency block including multiple resource blocks is extracted.

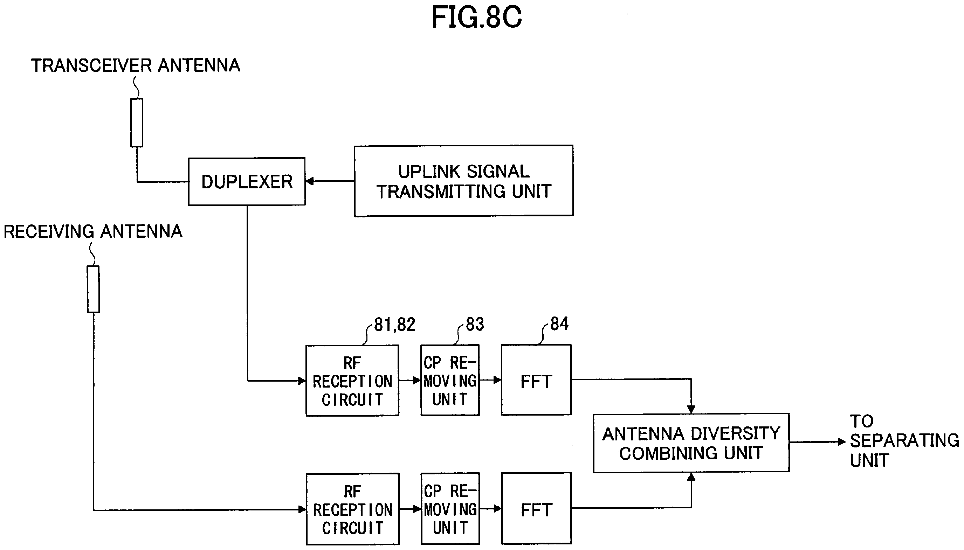

FIG. 8C shows components related to a receiving unit of the mobile terminal shown in FIG. 8A. In this embodiment, it is assumed that the mobile terminal performs antenna diversity reception using two antennas, although this feature is not essential for the present invention. Downlink signals received by the two antennas are input to RF reception circuits 81 and 82. Cyclic prefix removing units 83 remove guard intervals (cyclic prefixes) from the signals, and fast Fourier transform (FFT) units 84 fast-Fourier-transform the signals. Then, the signals are combined by an antenna diversity combining unit. The combined signal is input to the respective decoding units shown in FIG. 8A or to a separating unit shown in FIG. 8B.

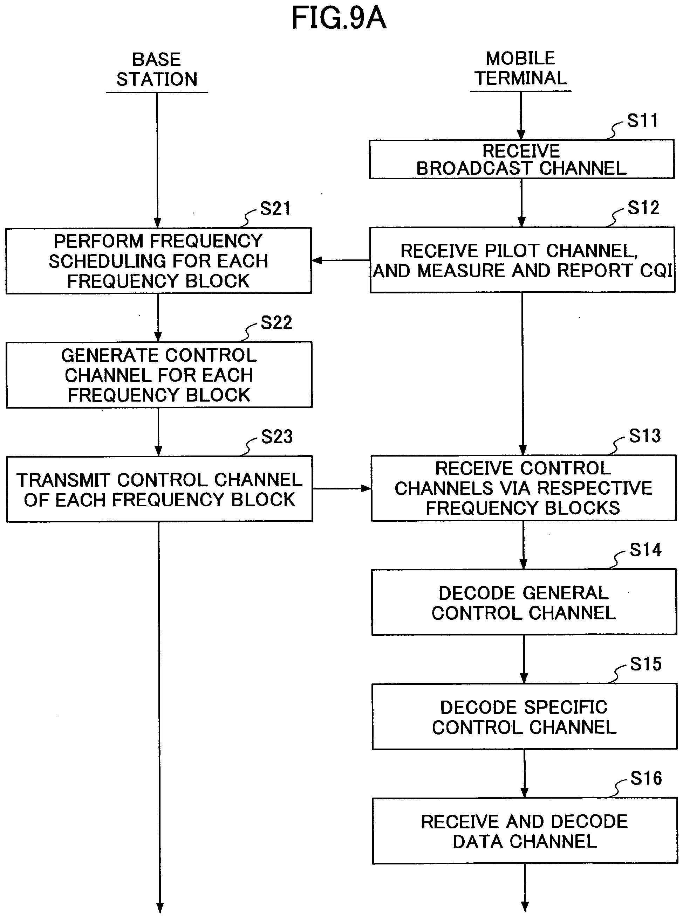

FIG. 9A is a flowchart showing an exemplary process according to an embodiment of the present invention. In the descriptions below, it is assumed that a user carrying a mobile terminal UE1 supporting a 10 MHz bandwidth has entered a cell or a sector using a 20 MHz bandwidth for communications. It is also assumed that the minimum frequency band of the communication system is 5 MHz and the entire system frequency band is divided into four frequency blocks 1 through 4 as shown in FIG. 2.

In step S11, the terminal UE1 receives a broadcast channel from the base station and determines frequency blocks that the terminal UE1 is allowed to use. The broadcast channel is, for example, transmitted using a 5 MHz band including the center frequency of the 20 MHz band. This enables terminals supporting different bandwidths to easily receive the broadcast channel. For example, the base station allows a user communicating with a 10 MHz bandwidth to use a combination of two adjacent frequency blocks, i.e., frequency blocks 1 and 2, 2 and 3, or 3 and 4. The base station may allow the user to use any one or a specific one of the combinations. In this example, it is assumed that the terminal UE1 is allowed to use frequency blocks 2 and 3.

In step S12, the terminal UE1 receives a downlink pilot channel and measures the received signal quality for respective frequency blocks 2 and 3. The received signal quality is measured for each resource block in the respective frequency blocks and all measurements are reported as channel quality indicators (CQIs) to the base station.

In step S21, the base station performs frequency scheduling for each frequency block based on CQIs reported by the terminal UE1 and other terminals. In this example, a data channel for the terminal UE1 is transmitted using frequency blocks 2 and 3. This information is being managed by the frequency block allocation control unit 31 (see FIG. 3A).

In step S22, the base station generates control signaling channels for each frequency block according to scheduling information. The control signaling channels include a general control channel and specific control channels.

In step S23, the base station transmits the control signaling channels and shared data channels of the respective frequency blocks according to the scheduling information.

In step S13, the terminal UE1 receives signals transmitted via frequency blocks 2 and 3.

In step S14, the terminal UE1 separates the general control channel from the control signaling channels received via frequency block 2, decodes the general control channel, and thereby extracts scheduling information. The terminal UE1 also separates the general control channel from the control signaling channels received via frequency block 3, decodes the general control channel, and thereby extracts scheduling information. The scheduling information of each of frequency blocks 2 and 3 includes information indicating whether resource blocks are allocated to a shared data channel for the terminal UE1. If resource blocks are allocated, the scheduling information also includes information indicating the corresponding resource block numbers. If no resource block is allocated to the shared data channel for the terminal UE1, the terminal UE1 returns to the standby mode and waits for the next control signaling channels. If resource blocks are allocated to a shared data channel for the terminal UE1, the terminal UE1 separates a corresponding specific control channel from the received signal and decodes the specific control channel in step S15. The specific control channel includes a data modulation scheme, a channel coding rate, and HARQ information for the shared data channel.

In step S16, the terminal UE1 decodes the shared data channel in the received signal based on information extracted from the specific control channel. The mobile terminal may report acknowledge (ACK) or negative acknowledge (NACK) to the base station according to the result of decoding. Thereafter, the above steps are repeated.

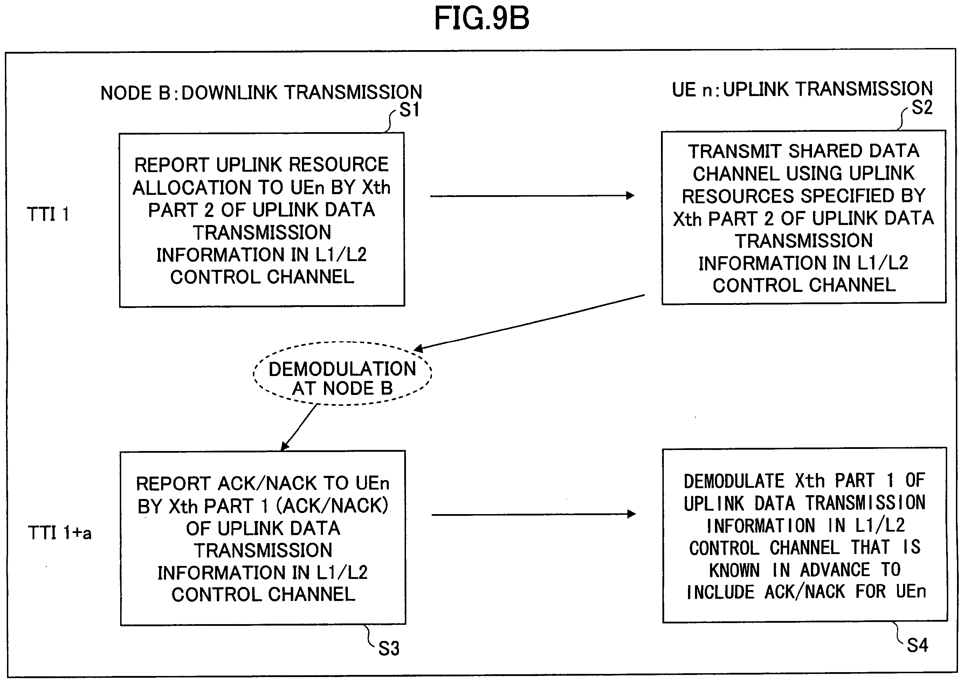

FIG. 9B is a drawing illustrating an exemplary method for reducing the amount of uplink data transmission information. In step S1, the base station transmits a downlink L1/L2 control channel. As described above (particularly with reference to FIG. 7C), sets of control information for multiple communication terminals are multiplexed for transmission. Each communication terminal demodulates the sets of control information in the L1/L2 control channel for itself and other communication terminals. Here, let us assume that control information including the UE-ID of a communication terminal is in the xth position in a general control channel. The communication terminal demodulates the general control channel and identifies resources (e.g., resource blocks) allocated to the communication terminal based on allocation information in the general control channel.

In step S2, the communication terminal transmits (a packet of) an uplink data channel D (t = TTI 1) to the base station using the allocated resource blocks. Here, t = TTI 1 indicates time.

In step S3, the base station receives and decodes the uplink data channel D (t = TTI 1) and determines whether any error is present. The determination result is indicated by ACK or NACK. Then, the base station reports the determination result via an L1/L2 control channel to the communication terminal that has transmitted the uplink data channel D. According to the table shown in FIG. 5A, the determination result (acknowledgement information) belongs to part 1 of the uplink data transmission information. The base station also receives uplink channels from other communication terminals and transmits the acknowledgement information (ACK/NACK) to each of the other communication terminals. Accordingly, it is possible to enable each communication terminal to identify the corresponding acknowledgement information (ACK/NACK) for a previously transmitted uplink data channel by attaching user identification information (ID) to each part 1 (ACK/NACK) of the uplink data transmission information in the downlink L1/L2 control channel.

However, in this embodiment, the downlink L1/L2 control channel is transmitted without attaching identification information to part 1 information for each communication terminal to reduce the amount of control information. Instead, in this embodiment, the correspondence between part 1 information and an allocation number X used for part 2 information is maintained for each communication terminal. Here, let us assume that a multiplexing scheme as shown by FIG. 7C (1) is employed and an allocation number 3 (X=3) is used to report the part 2 information to the communication terminal UE1. In this case, the communication terminal UE1 demodulates resource allocation information with the allocation number 3 to identify a resource block(s) allocated for an uplink data channel and transmits the uplink data channel using the identified resource block. The part 1 information (ACK/NACK) for the uplink data channel is included in a resource with an allocation number 3 in a downlink L1/L2 control channel to be transmitted at t=TTI 1+ α . Here, α indicates a time period after which acknowledgement information is returned. In step S3 of FIG. 9B, this downlink L1/L2 control channel is transmitted.

In step S4, each communication terminal reads the part 1 information based on the allocation number X and the time period α to determine whether it is necessary to retransmit the uplink data channel D (t = TTI 1) transmitted at t = TTI 1.

Thus, in this embodiment, the one-to-one correspondence between the allocation number used in step S1 and the allocation number used in step S3 is maintained for each communication terminal. This method eliminates the need for the base station to attach user identification information to each part 1 (ACK/NACK) of the uplink data transmission information. In other words, this method makes it possible to reduce the amount of information of the downlink L1/L2 control channel generated in step S22 shown in FIG. 9A. Assuming that resources for uplink data channels are allocated to M communication terminals at time t = TTI 1, allocation numbers 1 through M are used. In this case, the number of sets of allocation information (part 2) in the uplink data transmission information and the number of destinations to which acknowledgement information (part 1) is to be transmitted at time t = TTI 1+α are both M. Therefore, it is always possible to maintain the one-to-one correspondence between allocation numbers X.

Thus, it is possible to reduce the number of resources allocated in advance for transmission of downlink ACK/NACK by associating sets of uplink resource allocation information in a downlink control channel with the resources used for transmission of downlink ACK/NACK. More specifically, it is possible to reduce the number of resources allocated in advance for downlink ACK/NACK by associating allocation numbers of parts 2 of the uplink data transmission information in a downlink control channel used for uplink resource allocation and allocation numbers of parts 1 of the uplink data transmission information that identify resources used to transmit downlink ACK/NACK for uplink data channels.

When resources are allocated to data channels without using a control signaling channel, a method used for retransmission or persistent scheduling may be employed.

When persistent scheduling is employed, resources for ACK/NACK are provided separately.

Alternatively, indexes of uplink resources, such as resource units, for data channels may be associated with resources for downlink ACK/NACK. With this method, however, the number of resources used for ACK/NACK is determined according to the number of multiplexed users. For example, when the transmission bandwidth is 10 MHz and space division multiple access (SDMA) is performed by two users, 50x2=100 RUs are required.

Therefore, to reduce the number of resources to be reserved, it is preferable to associate sets of uplink resource allocation information in a downlink control channel with resources used for transmission of downlink ACK/NACK.

### <SECOND EXAMPLE>

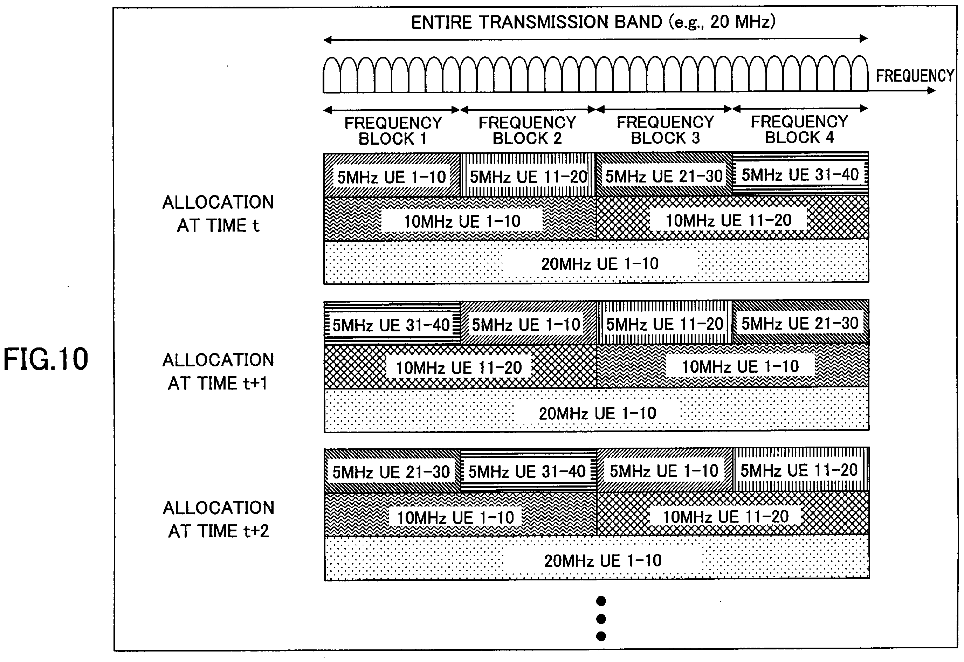

FIG. 10 is a drawing illustrating an example of frequency hopping. In FIG. 10, a frequency band allocated to the communication system has a bandwidth of 20 MHz and includes four frequency blocks with the minimum bandwidth of 5 MHz. In this example, it is assumed that the communication system can accommodate 40 users supporting a 5 MHz bandwidth, 20 users supporting a 10 MHz bandwidth, and 10 users supporting a 20 MHz bandwidth.

The users supporting the 20 MHz bandwidth can always use all frequency blocks 1 through 4. Meanwhile, users 1 through 10 of 40 users supporting only the 5 MHz bandwidth are allowed to use only frequency block 1 at time t, to use only frequency block 2 at time t+1, and to use only frequency block 3 at time t+2. Similarly, users 11 through 20 supporting the 5 MHz bandwidth are allowed to use frequency blocks 2, 3, and 4 at time t, t+1, and t+2, respectively. Users 21 through 30 supporting the 5 MHz bandwidth are allowed to use frequency blocks 3, 4, and 1 at time t, t+1, and t+2, respectively. Users 31 through 40 supporting the 5 MHz bandwidth are allowed to use frequency blocks 4, 1, and 2 at time t, t+1, and t+2, respectively. Also, users 1 through 10 of 20 users supporting only the 10 MHz bandwidth are allowed to use only frequency blocks 1 and 2 at time t, to use only frequency blocks 3 and 4 at time t+1, and to use only frequency blocks 1 and 2 at time t+2. Similarly, users 11 through 20 supporting the 10 MHz bandwidth are allowed to use frequency blocks 3 and 4, frequency blocks 1 and 2, and frequency blocks 3 and 4 at time t, t+1, and t+2, respectively.

Such a frequency hopping pattern is reported beforehand to the users via a broadcast channel or by any other method. Here, multiple frequency hopping patterns may be predefined and a pattern number indicating one of the frequency hopping patterns to be used may be reported to the users. This method makes it possible to report the frequency hopping pattern to users by using a small number of bits. When it is possible to select frequency blocks used for communications as in this example, it is preferable to change the frequency blocks used for communications after the communications are started in order to equalize the communication quality between users and frequency blocks. If frequency hopping is not performed and the communication quality varies from frequency block to frequency block, a certain user may have to communicate with poor quality all the time. Meanwhile, with frequency hopping, even if the communication quality of a user is poor at a time point, it can be expected that the communication quality of the user becomes better at another time point.

With the exemplary frequency hopping pattern shown in FIG. 10, the 5 MHz band or the 10 MHz band used by a user is shifted one by one to the right. However, any other type of hopping pattern may be used as long as the hopping pattern is known to the sending and receiving ends.

### <THIRD EXAMPLE>

In a third example of the present invention, methods of transmitting a paging channel in addition to a control signaling channel are described.

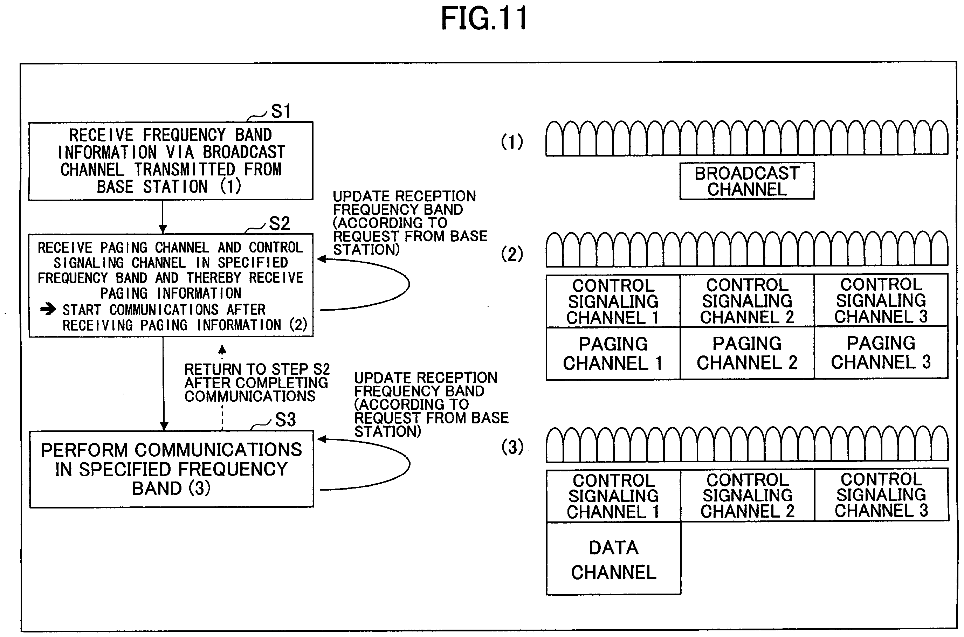

FIG. 11 is a drawing illustrating an exemplary process (flowchart on the left side) and a frequency band (on the right side) used in the process according to an example of the present invention. In step S1, the base station transmits a broadcast channel to users covered by the base station. As shown in FIG. 11 (1), the broadcast channel is transmitted using the minimum bandwidth including the center frequency of the entire frequency band. Broadcast information reported by the broadcast channel includes the correspondence between bandwidths supported by the users and usable frequency blocks.

In step S2, a user (e.g., UE1) enters the standby mode in a specified frequency block (e.g., frequency block 1). The user UE1 adjusts the reception band so as to be able to receive a signal in frequency block 1 that the user UE1 is allowed to use. In this example, in addition to a control signaling channel for the user UE1, a paging channel for the user UE1 is also transmitted using frequency block 1. If it is determined that the user UE1 is being paged by the paging channel, the process goes to step S3.

In step S3, the user UE1 receives a data channel via a specified frequency block according to scheduling information. Then, the user UE1 enters the standby mode again.

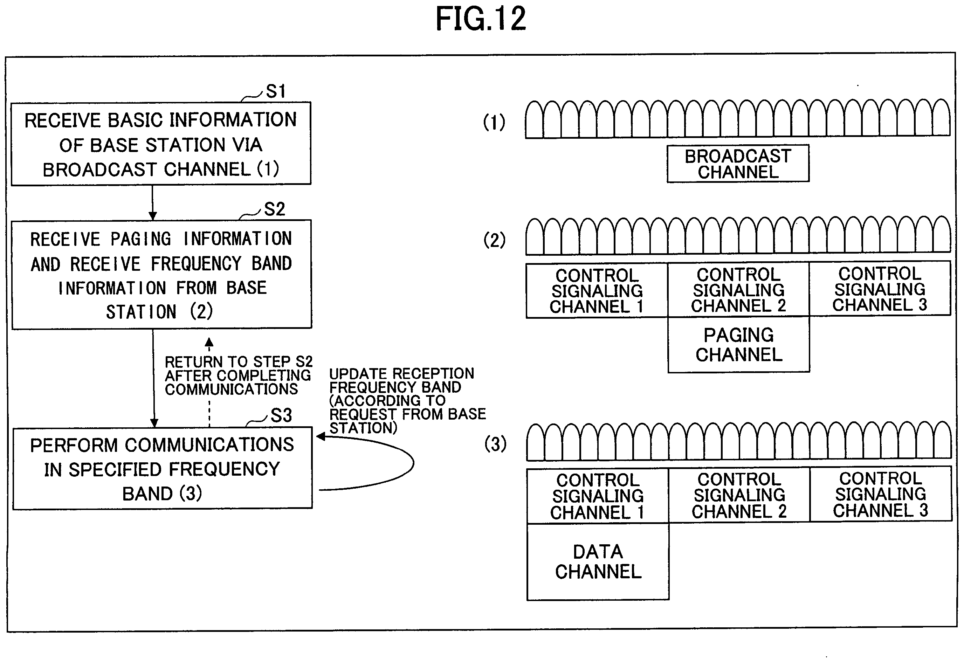

FIG. 12 is a drawing illustrating another exemplary process (flowchart on the left side) and a frequency band (on the right side) used in the process according to an example of the present invention. Similar to the process shown in FIG. 11, in step S1, the base station transmits a broadcast channel using the minimum bandwidth including the center frequency of the entire frequency band (FIG. 12 (1)). Also in this example, it is assumed that the user UE1 is allowed to use frequency block 1.

In step S2, the user UE1 enters the standby mode. Different from the example of FIG. 11, the user UE1 does not adjust the reception band at this stage. Therefore, the user UE1 waits for a paging channel in the same frequency band as that used to receive the 5 broadcast channel (FIG. 12 (2)).

In step S3, after receiving the paging channel, the user UE1 switches to frequency block 1 allocated to itself, receives a control signaling channel, and communicates according to scheduling information (FIG. 12 (3)). Then, the user UE1 enters the standby mode again.

In the example of FIG. 11, the user UE1 switches to frequency block 1 as soon as it enters the standby mode. Meanwhile, in the example of FIG. 12, the user UE1 does not switch to frequency block 1 when entering the standby mode, but switches to frequency block 1 after the user UE1 is paged. In other words, in the method of FIG. 11, each user waits for a signal in a frequency block allocated to the user; and in the method of FIG. 12, all users wait for a signal in the same frequency band. Compared with the method of FIG. 12, the method of FIG. 11 may be preferable to equally, use the entire frequency resources. Further, a neighboring cell search for determining whether handover is necessary is performed using the minimum bandwidth around the center frequency of the entire frequency band. Accordingly, to reduce the number of times frequency tuning is performed, it is preferable to use the same frequency band for reception during the standby mode and for the cell search as shown in FIG. 12.

### <FOURTH EXAMPLE>

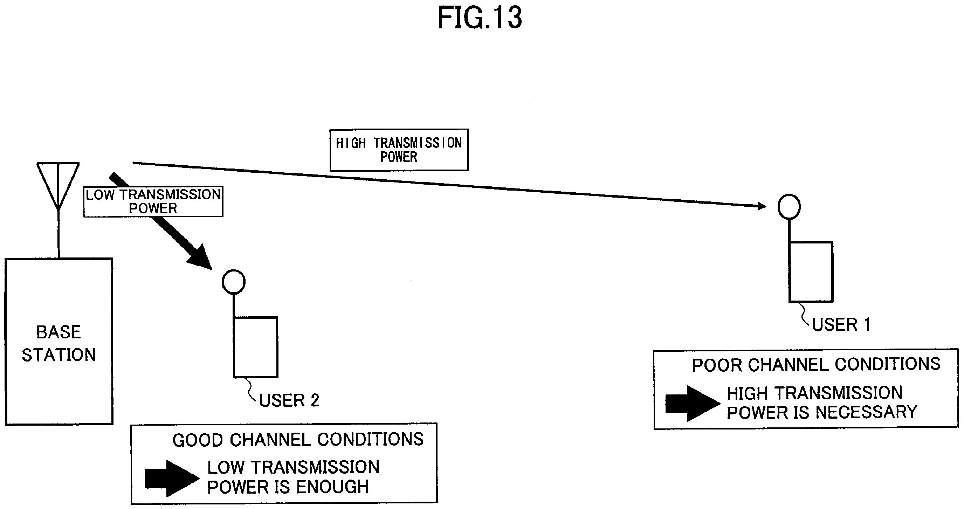

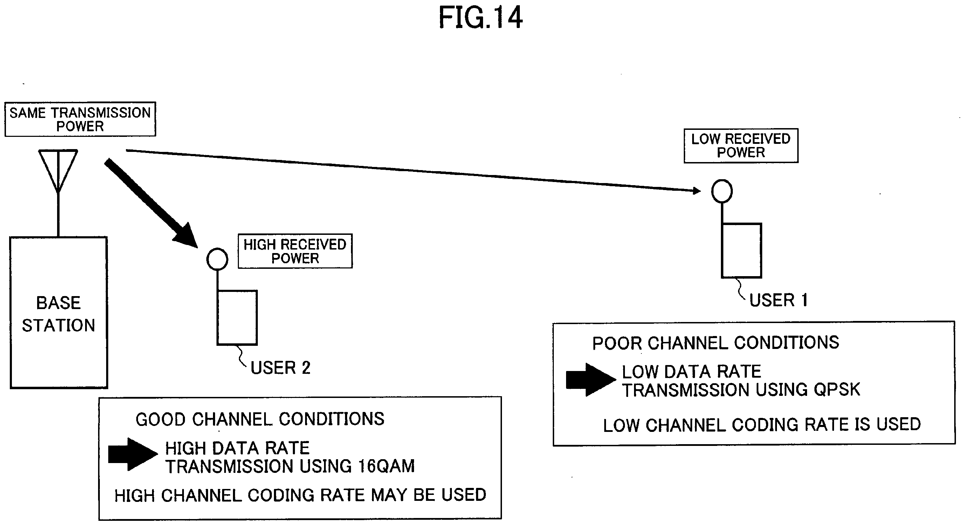

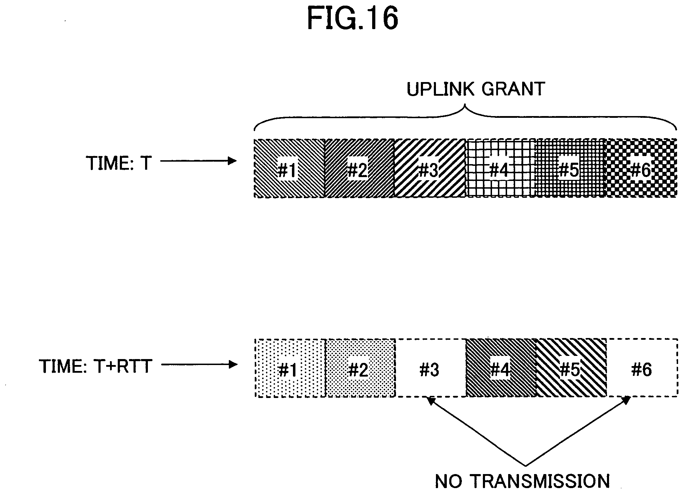

To improve the received signal quality of control channels, it is preferable to perform link adaptation. In a fourth example of the present invention, transmission power control (TPC) and adaptive modulation and coding (AMC) are used to perform link adaptation. FIG. 13 is a drawing illustrating an example of transmission power control where transmission power of downlink channels is controlled to achieve desired reception quality. Referring to FIG. 11, a high transmission power level is used to transmit a downlink channel to user 1 because user 1 is away from the base station and its channel conditions are expected to be poor. Meanwhile, channel conditions of user 2 close to the base station are expected to be good. In this case, using a high transmission power level to transmit a downlink channel to user 2 may increase the received signal quality at user 2 but may also increase interference with other users. Because the channel conditions of user 2 are good, it is possible to achieve desired reception quality with a low transmission power level. Therefore, a downlink channel for user 2 is transmitted using a comparatively low transmission power level. When only transmission power control is employed, a fixed combination of a modulation scheme and a channel coding scheme known to the sending and receiving ends is used. Accordingly, under the transmission power control, it is not necessary to report modulation and channel coding schemes to the users for demodulation of channels FIG. 14 is a drawing illustrating an example of adaptive modulation and coding (AMC) where one or both of the modulation scheme and the coding scheme are adaptively changed according to channel conditions to achieve desired reception quality. Assuming that the transmission power of the base station is constant, it is expected that channel conditions of user 1 away from the base station are poor. In such a case, the modulation level and/or the channel coding rate is set at a small value. In the example shown in FIG. 14, QPSK is used as the modulation scheme for user 1 and therefore two bits of information are transmitted per symbol. On the other hand, the channel conditions of user 2 close to the base station are expected to be good and therefore, the modulation level and/or the channel coding rate is set at a large value. In FIG. 14, 16QAM is used as the modulation scheme for user 2 and therefore four bits of information are transmitted per symbol. This method makes it possible to achieve desired reception quality for a user with poor channel conditions by improving the reliability, and to achieve desired reception quality as well as increase the throughput for a user with good channel conditions. When adaptive modulation and coding is employed, modulation information including the modulation scheme, the coding scheme, and the number of symbols of a received channel is necessary to demodulate the channel. Therefore, it is necessary to report the modulation information to the receiving end. Also, with the above method, the number of bits transmitted per symbol varies depending on the channel conditions. In other words, a small number of symbols are necessary to transmit information when channel conditions are good, but a large number of symbols are necessary to transmit information when channel conditions are poor.

In the fourth example of the present invention, transmission power control is performed for a general control channel to be decoded by users in general, and transmission power control and/or adaptive modulation and coding is performed for specific control channels to be decoded by users who are allocated resource blocks. The fourth example may be implemented by any one of the three methods described below.

### (1) TPC-TPC

In a first method, only transmission power control is performed for the general control channel and the specific control channels. In this method, a properly received channel can be demodulated without receiving modulation information including the modulation scheme, coding rate, etc. in advance because they are fixed. The general control channel is distributed across a frequency block and is therefore transmitted using the same transmission power level throughout the entire frequency range. Meanwhile, a specific control channel for a user is mapped to resources within a resource block(s) allocated to the user. Therefore, transmission power of specific control channels may be adjusted for respective users who are allocated resource blocks to improve the received signal quality of the users. Taking FIGs. 7A and 7B as an example, the general control channel may be transmitted with a transmission power level P₀, the specific control channel for user 1 (UE1) may be transmitted with a transmission power level P₁ suitable for user 1, the specific control channel for user 2 (UE2) may be transmitted with a transmission power level P₂ suitable for user 2, and the specific control channel for user 3 (UE3) may be transmitted with a transmission power level P₃ suitable for user 3. In this case, shared data channels may be transmitted using the corresponding transmission power levels P₁, P₂, and P₃ or a different transmission power level P_{D}.

As described above, the general control channel is decoded by all users. However, the purpose of the general control channel is to report the presence of data and scheduling information for the data to users to which resource blocks are allocated. Therefore, the transmission power used to transmit the general control channel may be adjusted to achieve desired reception quality for the users who are allocated resource blocks. For example, in FIGs. 7A and 7B, if all users 1, 2, and 3 who are allocated resource blocks are located near the base station, the transmission power level P₀ for the general control channel may be set at a comparatively small value. In this case, a user other than users 1, 2, and 3 who is located, for example, at a cell edge may not be able to decode the general control channel properly. However, this does not cause any practical problem because no resource block is allocated to the user.

### (2) TPC-AMC

In a second method, transmission power control is performed for the general control channel and adaptive modulation and coding is performed for the specific control channels. When AMC is employed, it is basically necessary to provide users with modulation information in advance. In this method, modulation information for the specific control channels is included in the general control channel. Therefore, each user receives, decodes, and demodulates the general control channel first, and determines whether data for the user are present. If data for the user are present, the user extracts scheduling information as well as modulation information including a modulation scheme, a coding scheme, and the number of symbols of the specific control channel. Then, the user demodulates the specific control channel according to the scheduling information and the modulation information, thereby obtaining modulation information of a shared data channel, and demodulates the shared data channel based on the modulation information.

Control channels require lower throughput compared with shared data channels. Therefore, the number of combinations of modulation and coding schemes for AMC of the specific control channel may be smaller than that used for the shared data channel. For example, for AMC of the specific control channel, QPSK is statically used as the modulation scheme and the coding rate may be selected from 7/8, 3/4, 1/2, and 1/4.

The second method enables all users to receive the general control channel with a certain level of quality as well as to improve the reception quality of the specific control channels. This is achieved by mapping specific control channels to resource blocks providing good channel conditions for respective selected communication terminals and by using appropriate modulation schemes and/or coding schemes for the respective communication terminals. Thus, in this method, adaptive modulation and coding is applied to specific control channels to improve their reception quality.

When a very limited number of combinations of modulation schemes and channel coding rates are used, a receiving end may be configured to try all of the combinations to demodulate a specific control channel and to use properly demodulated information. This approach makes it possible to perform a certain level of AMC without reporting modulation information to users in advance.

### (3) TPC-TPC/AMC

In a third method, transmission power control is performed for the general control channel, and both transmission power control and adaptive modulation and coding are performed for the specific control channels. As described above, when AMC is employed, it is basically necessary to provide users with modulation information in advance. Also, it is preferable to provide a large number of combinations of modulation schemes and channel coding rates to achieve desired reception quality even when the degree of fading is high. However, using a large number of combinations complicates the process of determining an appropriate combination, increases the amount of information needed to report the determined combination, and increases the processing workload and overhead. In the third method, reception quality is maintained by a combination of TPC and AMC. In other words, it is not necessary to compensate for the entire fading solely by AMC. For example, a modulation scheme and a coding scheme that nearly achieve desired quality are selected and then transmission power is adjusted to fully achieve the desired quality under the selected modulation scheme and coding scheme. This method makes it possible to reduce the number of combinations of modulation schemes and channel coding schemes.

In all of the three methods described above, only transmission power control is performed for the general control channel. Therefore, the user can receive the general control channel with desired reception quality and also can easily obtain control information from the general control channel. Unlike AMC, transmission power control does not change the amount of information transmitted per symbol and therefore the general control channel can be easily transmitted using a fixed format. Also, because the general control channel is distributed across the entire frequency block or multiple resource blocks, high frequency diversity gain can be expected. This in turn makes it possible to achieve enough reception quality by simple transmission power control where a long-period average of the transmission power level is adjusted. However, performing only transmission power control for the general control channel is not an essential feature of the present invention. For example, the transport format of the general control channel may be changed at long intervals and reported via a broadcast channel.

Meanwhile, including AMC control information (modulation information) for specific control channels in the general control channel makes it possible to perform AMC for the specific control channels and thereby makes it possible to improve the transmission efficiency and quality of the specific control channels. While the number of symbols necessary for a general control channel is substantially constant, the number of symbols necessary for a specific control channel varies depending on the modulation scheme, the coding rate, the number of antennas, and so on. For example, assuming that the number of necessary symbols is N when the channel coding rate is 1/2 and the number of antennas is 1, the number of necessary symbols becomes 4N when the channel coding rate is 1/4 and the number of antennas is 2. With this example, it is possible to transmit a control channel using a simple fixed format as shown in FIGs. 7A and 7B even if the number of symbols necessary for the control channel changes. Although the number of symbols necessary for a specific control channel changes, the number of symbols necessary for a general control channel basically does not change. Therefore, it is possible to flexibly cope with the variation in the number of symbols by changing the proportion of the specific control channel to the shared data channel in a given resource block.

### <FIFTH EXAMPLE>

For transmission of downlink ACK/NACK described in the first example, particularly for transmission of ACK/NACK for retransmission packets, any one of the following methods may be used: method 1 where radio resources different from those used for initial transmission are reserved for retransmission; method 2 where use of resources having the same uplink grant numbers as those of resources used for initial transmission of packets is prevented; and method 3 where even resources for retransmission are allocated by a grant.

Below, methods 1 through 3 are described in detail.

### (Method 1)

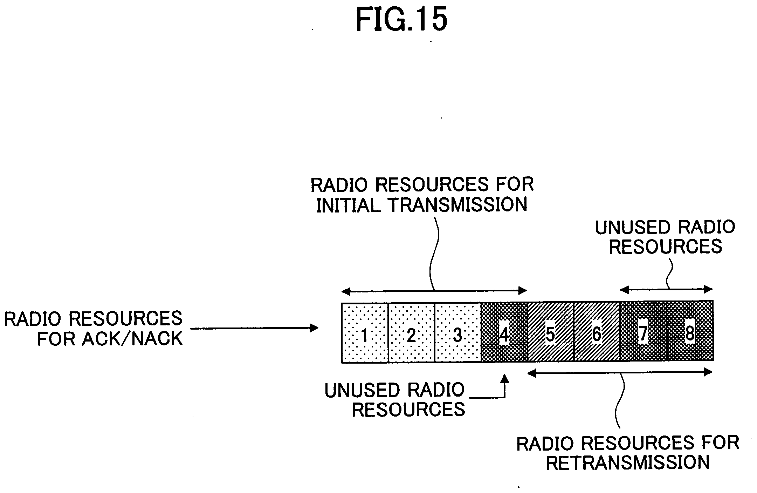

Radio resources different from those used for initial transmission are reserved for retransmission. The radio resources may include codes and/or frequencies. For acknowledgement information for initial transmission, radio resources the number of which is the same as the maximum number of scheduled users are reserved. Meanwhile, for retransmission, radio resources that are different from those used for initial transmission and the number of which is the same as the maximum number of scheduled users are reserved. For example, as shown in FIG. 15, four radio resources #1-#4 are reserved for initial transmission and four radio resources #5-#8 are reserved for retransmission. When the number of actually scheduled users is less than the maximum number of scheduled users, radio resources corresponding to the number of actually scheduled users are used out of the reserved radio resources. For example, in FIG. 15, when only three users are scheduled for initial transmission, radio resource #4 in the reserved radio resources is not used. Similarly, when only two users are scheduled for retransmission, radio resources #7 and #8 in the reserved radio resources are not used.

### (Method 2)

Use of resources having the same uplink grant numbers as those of resources used for initial transmission of packets is prevented. For uplink, Sync ARQ is employed so that the difference between the initial transmission timing and the retransmission timing is kept constant. Therefore, it is not necessary to send a grant for retransmission. However, if resources having the same uplink grant numbers as those of resources where errors have occurred are allocated to packets after round trip time (RTT), ACK/NACK collides with the packets. In this method, to prevent such collision, resources having the same uplink grant numbers as those of resources where errors have occurred are not allocated to packets. In other words, no packet is transmitted with the resources having the uplink grant numbers. Here, round trip time (RTT) indicates time required for a communication packet to travel from a sending end to a receiving end and to return to the sending end. Method 2 makes it possible to use transmission power of the resources not allocated to packets (non-allocated resources) for other resources. Although the transmission efficiency is reduced because no data are transmitted with the non-allocated resources, its effect is small because the frequency of retransmission is very low. In FIG. 16, resources with uplink grant numbers #1-#6 are allocated at time T and if errors are detected in the resources with uplink grant numbers #3 and #6, the resources with uplink grant numbers #3 and #6 are not allocated, i.e., no packet is transmitted with the resources with uplink grant numbers #3 and #6.

### (Method 3)

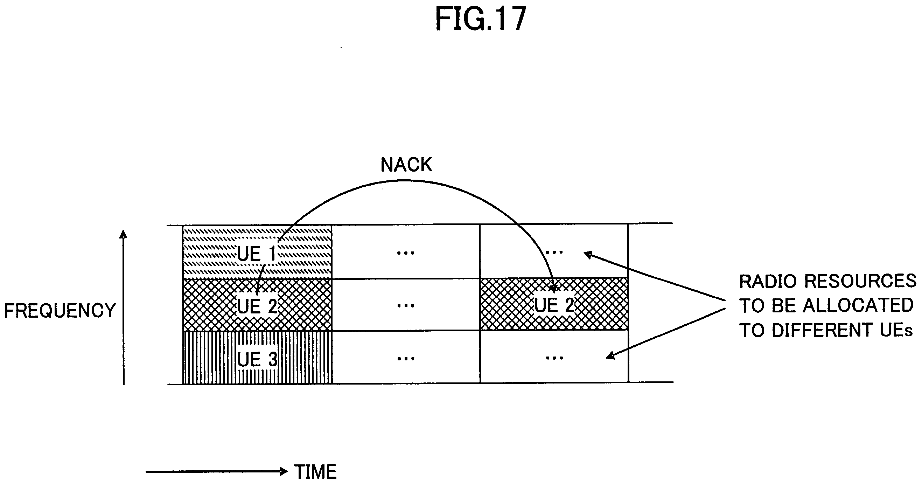

In Sync ARQ, retransmission is performed after a predetermined period of time from when previous transmission is performed and the same resources (physical resources, modulation, and coding) used for the previous transmission are used for the retransmission. With Sync ARQ, fragmentation of resources may occur as shown in FIG. 17. In FIG. 17, resources are allocated to three users. The same TTI is allocated to the three users and retransmission is necessary only for user UE2. In a system where a single carrier scheme is employed for uplink, only consecutive subcarriers can be allocated to a user. Therefore, when retransmission is necessary for user UE2, only the previously allocated resources can be allocated to users UE1 and UE3 at the retransmission timing. In other words, it may not be possible to allocate necessary resources to users other than user UE2 and resource use efficiency may be reduced. To prevent fragmentation of resources, it is proposed to allocate resources by a grant even in a retransmission process (see, for example, 3GPP R2-070060). Allocating resources, for retransmission by a grant eliminates the need to reserve resources for ACK/NACK for retransmission packets.

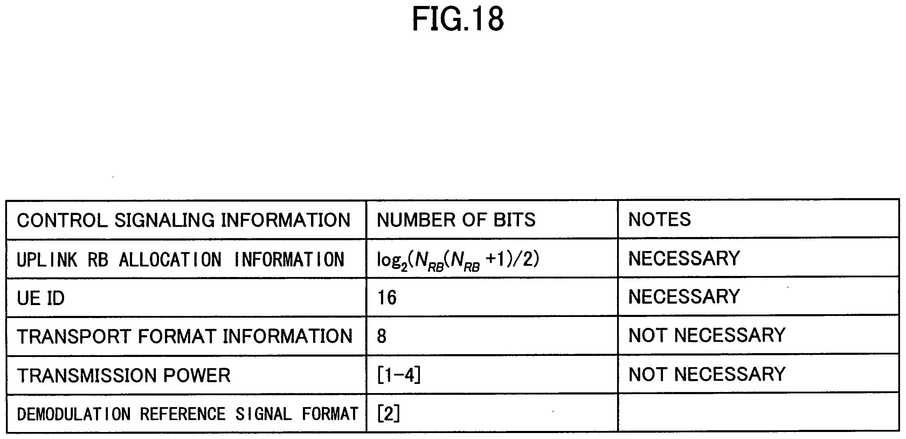

Only a part of information items may be included in a grant to be used for allocation of resources for retransmission. That is, a grant including all normal information items as shown in FIG. 18 may be used (a), or a grant including only a part of the 10 information items shown in FIG. 18 may be used (b).

FIG. 18 shows a configuration of a grant. The control signaling information of the grant includes uplink RB allocation information, a UE ID, transport format information, transmission power, and a demodulation reference signal format. For a grant used in a retransmission process, uplink RB assignment information and a UE ID are necessary. Although the present invention is described above in different examples, the distinctions between the examples are not essential for the present invention, and the examples may be used individually or in combination. Although specific values are used in the above descriptions to facilitate the understanding of the present invention, the values are just examples 25 and different values may also be used unless otherwise mentioned.

The present invention is not limited to the specifically disclosed examples, and variations and modifications may be made without departing from the scope of the present invention. Although functional block diagrams are used to describe apparatuses in the above examples, the apparatuses may be implemented by hardware, software, or a combination of them.

## Claims

1. A base station performing frequency scheduling in a frequency band including multiple resource blocks each including one or more subcarriers, the base station comprising:
a frequency scheduler (32) configured to generate scheduling information for allocating one or more of the resource blocks to a communication terminal based on channel condition information received from the communication terminal;
a coding and modulation unit (42A, 42B) configured to encode and modulate a specific control channel including the generated scheduling information and to be decoded by the communication terminal to which the one or more of the resource blocks are allocated;
a multiplexing unit (43-A, 43-B) configured to time-division-multiplex the specific control channel; and
a transmission unit configured to transmit the specific control channel, **characterized in that**
when t1 indicates a first timing at which uplink data transmission is performed, t2 indicates a second timing at which downlink acknowledgement information for the uplink data transmission is transmitted, and α indicates a predetermined length in time, t2 is represented by t2=t1+α; and
wherein the indices of the resource blocks indicated by the scheduling information and allocated for the uplink data transmission at the first timing are associated with resources used to transmit the downlink acknowledgement information at the second timing.

2. A transmission method used by a base station that performs frequency scheduling in a frequency band including multiple resource blocks each including one or more subcarriers, the method comprising the steps of:
generating (S21) scheduling information for allocating one or more of the resource blocks to a communication terminal based on channel condition information received from the communication terminal;
encoding and modulating a specific control channel including the generated scheduling information and to be decoded by the communication terminal to which the one or more of the resource blocks are allocated; and
time-division-multiplex the specific control channel;
transmitting the specific control channel, **characterized in that**
when t1 indicates a first timing at which uplink data transmission is performed, t2 indicates a second timing at which downlink acknowledgement information for the uplink data transmission is transmitted, and α indicates a predetermined length in time, t2 is represented by t2=t1+α; and
wherein the indices of the resource blocks indicated by the scheduling information and allocated for the uplink data transmission at the first timing are associated with resources used to transmit the downlink acknowledgement information at the second timing.

3. A communication terminal for a communication system where frequency scheduling is performed in a frequency band including multiple resource blocks each including one or more subcarriers, the communication terminal comprising:
a receiving unit configured to receive, from a base station, a specific control channel including scheduling information for allocating one or more of the resource blocks to the communication terminal;
a separating unit configured to separate the specific control channel that is time-division-multiplexed;
a control channel decoding unit (88) configured to decode the specific control channel, **characterized in that**
when t1 indicates a first timing at which uplink data transmission is performed, t2 indicates a second timing at which downlink acknowledgement information for the uplink data transmission is transmitted, and α indicates a predetermined length in time, t2 is represented by t2=t1+α; and
wherein the indices of the resource blocks indicated by the scheduling information and allocated for the uplink data transmission at the first timing are associated with resources used to transmit the downlink acknowledgement information at the second timing.

4. A reception method used by a communication terminal for a communication system where frequency scheduling is performed in a frequency band including multiple resource blocks each including one or more subcarriers, the method comprising the steps of:
receiving (S13), from a base station, a specific control channel including scheduling information for allocating one or more of the resource blocks to the communication terminal;
separating the specific control channel that is time-division-multiplexed;
decoding (S15) the specific control channel, **characterized in that**
when t1 indicates a first timing at which uplink data transmission is performed, t2 indicates a second timing at which downlink acknowledgement information for the uplink data transmission is transmitted, and α indicates a predetermined length in time, t2 is represented by t2=t1+α; and
wherein the indices of the resource blocks indicated by the scheduling information and allocated for the uplink data transmission at the first timing are associated with resources used to transmit the downlink acknowledgement information at the second timing.

5. A communication system, comprising:
the base station according to claim 1; andthe communication terminal of claim 3.

## Patentansprüche

1. Basisstation, die eine Frequenzkoordination in einem Frequenzband durchführt, das mehrere Ressourcenblöcke enthält, die jeweils einen oder mehrere Unterträger enthalten, wobei die Basisstation umfasst:
einen Frequenzkoordinierer (32), konfiguriert, um Koordinierungsinformationen zum Zuteilen eines oder mehrerer der Ressourcenblöcke an ein Kommunikationsendgerät auf Basis von von dem Kommunikationsendgerät empfangenen Kanalzustandsinformationen zu erzeugen;
eine Kodier- und Modulationseinheit (42A, 42B), konfiguriert, um einen spezifischen Steuerkanal zu kodieren und zu modulieren, der die erzeugten Koordinierungsinformationen enthält und von dem Kommunikationsendgerät zu dekodieren ist, welchem der eine oder die mehreren der Ressourcenblöcke zugeteilt sind;
eine Multiplexeinheit (43-A, 43-B), konfiguriert, um den spezifischen Steuerkanal zeitzumultiplexen; und
eine Übertragungseinheit, konfiguriert, um den spezifischen Steuerkanal zu übertragen, **dadurch gekennzeichnet, dass**
wenn t1 einen ersten Zeitpunkt angibt, zu welchem eine Uplink-Datenübertragung durchgeführt wird, t2 einen zweiten Zeitpunkt angibt, zu welchem Downlink-Bestätigungsinformationen für die Uplink-Datenübertragung übertragen werden, und α eine vorbestimmte zeitliche Länge angibt, t2 durch t2=t1+α dargestellt wird; und
wobei den Indizes der Ressourcenblöcke, die von den Koordinierungsinformationen angegeben werden und für die Uplink-Datenübertragung zum ersten Zeitpunkt zugeteilt sind, Ressourcen zugewiesen sind, die verwendet werden, um die Downlink-Bestätigungsinformationen zum zweiten Zeitpunkt zu übertragen.

2. Übermittlungsverfahren, das von einer Basisstation verwendet wird, die eine Frequenzkoordination in einem Frequenzband durchführt, das mehrere Ressourcenblöcke enthält, die jeweils einen oder mehrere Unterträger enthalten, wobei das Übermittlungsverfahren die folgenden Schritte umfasst:
Erzeugen (S21) von Koordinierungsinformationen zum Zuteilen von einem oder mehreren der Ressourcenblöcke an ein Kommunikationsendgerät auf Basis von von dem Kommunikationsendgerät empfangenen Kanalzustandsinformationen;
Kodieren und Modulieren eines spezifischen Steuerkanals, der die erzeugten Koordinierungsinformationen enthält und von dem Kommunikationsendgerät zu dekodieren ist, welchem der eine oder die mehreren der Ressourcenblöcke zugeteilt sind; und
Zeitmultiplexen des spezifischen Steuerkanals;
Übertragen des spezifischen Steuerkanals, **dadurch gekennzeichnet, dass**
wenn t1 einen ersten Zeitpunkt angibt, zu welchem eine Uplink-Datenübertragung durchgeführt wird, t2 einen zweiten Zeitpunkt angibt, zu welchem Downlink-Bestätigungsinformationen für die Uplink-Datenübertragung übertragen werden, und α eine vorbestimmte zeitliche Länge angibt, t2 durch t2=t1+α dargestellt wird; und
wobei den Indizes der Ressourcenblöcke, die von den Koordinierungsinformationen angegeben werden und für die Uplink-Datenübertragung zum ersten Zeitpunkt zugeteilt sind, Ressourcen zugewiesen sind, die verwendet werden, um die Downlink-Bestätigungsinformationen zum zweiten Zeitpunkt zu übertragen.

3. Kommunikationsendgerät für ein Kommunikationssystem, wo Frequenzkoordination in einem Frequenzband durchgeführt wird, das mehrere Ressourcenblöcke enthält, die jeweils einen oder mehrere Unterträger enthalten, wobei das Kommunikationsendgerät umfasst:
eine Empfangseinheit, konfiguriert, um von einer Basisstation einen spezifischen Steuerkanal zu empfangen, der Koordinierungsinformationen enthält, um einen oder mehrere der Ressourcenblöcke dem Kommunikationsendgerät zuzuteilen;
eine Trennungseinheit, konfiguriert, um den spezifischen Steuerkanal zu trennen, der zeitgemultiplext ist;
eine Steuerkanal-Dekodiereinheit (88), konfiguriert, um den spezifischen Steuerkanal zu dekodieren, **dadurch gekennzeichnet, dass**
wenn t1 einen ersten Zeitpunkt angibt, zu welchem eine Uplink-Datenübertragung durchgeführt wird, t2 einen zweiten Zeitpunkt angibt, zu welchem Downlink-Bestätigungsinformationen für die Uplink-Datenübertragung übertragen werden, und α eine vorbestimmte zeitliche Länge angibt, t2 durch t2=t1+α dargestellt wird; und
wobei den Indizes der Ressourcenblöcke, die von den Koordinierungsinformationen angegeben werden und für die Uplink-Datenübertragung zum ersten Zeitpunkt zugeteilt sind, Ressourcen zugewiesen sind, die verwendet werden, um die Downlink-Bestätigungsinformationen zum zweiten Zeitpunkt zu übertragen.

4. Empfangsverfahren, das von einem Kommunikationsendgerät für ein Kommunikationssystem durchgeführt wird, wo eine Frequenzkoordination in einem Frequenzband durchgeführt wird, das mehrere Ressourcenblöcke enthält, die jeweils einen oder mehrere Unterträger enthalten, wobei das Verfahren die folgenden Schritte umfasst:
Empfangen (S13) von einer Basisstation eines spezifischen Steuerkanals zum Zuteilen von einem oder mehreren der Ressourcenblöcke an das Kommunikationsendgerät;
Trennen des spezifischen Steuerkanals, der zeitgemultiplext ist;
Dekodieren (S15) des spezifischen Steuerkanals, **dadurch gekennzeichnet, dass**
wenn t1 einen ersten Zeitpunkt angibt, zu welchem eine Uplink-Datenübertragung durchgeführt wird, t2 einen zweiten Zeitpunkt angibt, zu welchem Downlink-Bestätigungsinformationen für die Uplink-Datenübertragung übertragen werden, und α eine vorbestimmte zeitliche Länge angibt, t2 durch t2=t1+α dargestellt wird; und
wobei den Indizes der Ressourcenblöcke, die von den Koordinierungsinformationen angegeben werden und für die Uplink-Datenübertragung zum ersten Zeitpunkt zugeteilt sind, Ressourcen zugewiesen sind, die verwendet werden, um die Downlink-Bestätigungsinformationen zum zweiten Zeitpunkt zu übertragen.

5. Kommunikationssystem, umfassend:
die Basisstation nach Anspruch 1; und
das Kommunikationsendgerät nach Anspruch 3.

## Revendications

1. Station de base exécutant une planification de fréquences dans une bande de fréquences incluant plusieurs blocs de ressources incluant chacun une ou plusieurs sous-porteuses, la station de base comprenant :
un planificateur de fréquences (32) configuré pour produire des informations de planification pour affecter un ou plusieurs des blocs de ressources à un terminal de communication sur la base d'informations d'état de canal reçues en provenance du terminal de communication ;
une unité de codage et de modulation (42A, 42B) configurée pour coder et moduler un canal de commande spécifique incluant les informations de planification produites et à décoder par le terminal de communication auquel le ou plusieurs des blocs de ressources sont affectés ;
une unité de multiplexage (43-A, 43-B) configurée pour multiplexer par répartition temporelle le canal de commande spécifique ; et
une unité d'émission configurée pour émettre le canal de commande spécifique, **caractérisé en ce que**
lorsque t1 indique un premier moment auquel l'émission de données en liaison montante est exécutée, t2 indique un second moment auquel des informations d'accusé de réception de liaison descendante pour l'émission de données en liaison montante sont transmises, et α indique une longueur prédéterminée dans le temps, t2 est représenté par t2 = t1 + α ; et
dans lequel les indices des blocs de ressources indiqués par les informations de planification et affectés à l'émission de données en liaison montante au premier moment sont associés à des ressources utilisées pour émettre les informations d'accusé de réception de liaison descendante au second moment.

2. Procédé d'émission utilisé par une station de base qui exécute une planification de fréquences dans une bande de fréquences incluant des blocs de ressources multiples incluant chacun une ou plusieurs sous-porteuses, le procédé comprenant les étapes :
de production d'informations de planification (S21) pour affecter un ou plusieurs des blocs de ressources à un terminal de communication sur la base d'informations d'état de canal reçues en provenance du terminal de communication ;
de codage et modulation d'un canal de commande spécifique incluant les informations de planification produites et à décoder par le terminal de communication auquel le ou plusieurs des blocs de ressources sont affectés ; et
de multiplexage par répartition temporelle du canal de commande spécifique;
d'émission du canal de commande spécifique, **caractérisé en ce que**
lorsque t1 indique un premier moment auquel l'émission de données en liaison montante est exécutée, t2 indique un second moment auquel les informations d'accusé de réception de liaison descendante pour l'émission de données en liaison montante sont émises et α indique une longueur prédéterminée dans le temps, t2 est représenté par t2 = t1 + α ; et
dans lequel les indices des blocs de ressources indiqués par les informations de planification et affectés à l'émission de données en liaison montante au premier moment sont associés à des ressources utilisées pour émettre les informations d'accusé de réception de liaison descendante au second moment.

3. Terminal de communication pour un système de communication dans lequel la planification de fréquences est exécutée dans une bande de fréquences incluant plusieurs blocs de ressources incluant chacun une ou plusieurs sous-porteuses, le terminal de communication comprenant :
une unité de réception configurée pour recevoir, en provenance d'une station de base, un canal de commande spécifique incluant des informations de planification pour affecter un ou plusieurs des blocs de ressources au terminal de communication ;
une unité de séparation configurée pour séparer le canal de commande spécifique qui est multiplexé par répartition temporelle ;
une unité de décodage de canal de commande (88) configurée pour décoder le canal de commande spécifique, **caractérisé en ce que**
lorsque t1 indique un premier moment auquel l'émission de données en liaison montante est exécutée, t2 indique un second moment auquel les informations d'accusé de réception de liaison descendante pour l'émission de données en liaison montante sont émises, et α indique une longueur prédéterminée dans le temps, t2 est représenté par t2 = t1 + α ; et
dans lequel les indices des blocs de ressources indiqués par les informations de planification et affectés pour l'émission de données en liaison montante au premier moment sont associés à des ressources utilisées pour émettre les informations d'accusé de réception de liaison descendante au second moment.

4. Procédé de réception utilisé par un terminal de communication pour un système de communication dans lequel une planification de fréquences est exécutée dans une bande de fréquences incluant de multiples blocs de ressources incluant chacun une ou plusieurs sous-porteuses, le procédé comprenant les étapes :
de réception (S13), en provenance d'une station de base, d'un canal de commande spécifique incluant des informations de planification pour affecter un ou plusieurs des blocs de ressources au terminal de communication ;
de séparation du canal de commande spécifique qui est multiplexé par répartition temporelle ;
de décodage (S15) du canal de commande spécifique, **caractérisé en ce que**
lorsque t1 indique un premier moment auquel l'émission de données en liaison montante est exécutée, t2 indique un second moment auquel les informations d'accusé de réception de liaison descendante pour l'émission de données en liaison montante sont émises et α indique une longueur prédéterminée dans le temps, t2 est représenté par t2 = t1 + α ; et
dans lequel les indices des blocs de ressources indiqués par les informations de planification et attribués pour l'émission de données en liaison montante au premier moment sont associés à des ressources utilisées pour émettre les informations d'accusé de réception de liaison descendante au second moment.

5. Système de communication comprenant :
la station de base selon la revendication 1 ; et
le terminal de communication de la revendication 3.
